(19) Europäisches Patentamt
European Patent Office
Office européen des brevets

(11) EP 0 703 938 B1

(12) **EUROPEAN PATENT SPECIFICATION**

(45) Date of publication and mention of the grant of the patent:
**24.11.1999 Bulletin 1999/47**

(21) Application number: **94918147.3**

(22) Date of filing: **27.05.1994**

(51) Int Cl.[6]: **C08G 77/42**, C08L 83/06, C08L 83/08, C08G 77/46, C08F 283/12

(86) International application number:
**PCT/US94/05999**

(87) International publication number:
**WO 94/28054 (08.12.1994 Gazette 1994/27)**

(54) **POLYDIORGANOSILOXANE-MODIFIED POLYMER AND A PROCESS FOR MAKING THE SAME**

POLYDIORGANOSILOXAN MODIFIZIERTES POLYMER UND HERSTELLUNGSVERFAHREN

POLYMERE MODIFIE AU MOYEN DE POLYDIORGANOSILOXANE ET SON PROCEDE DE FABRICATION

(84) Designated Contracting States:
**BE CH DE FR GB IT LI NL**

(30) Priority: **28.05.1993 US 68646**

(43) Date of publication of application:
**03.04.1996 Bulletin 1996/14**

(73) Proprietor: **AlliedSignal Inc.**
**Morristown, New Jersey 07962-2245 (US)**

(72) Inventors:
- **SASTRI, Vinod, Ram**
  **Richmond, VA 23220 (US)**
- **MOHAJER, Yousef**
  **Midlothian, VA 23113 (US)**
- **YOUNG, John, Armstrong**
  **Midlothian, VA 23113 (US)**
- **BOYLE, John, Bernard**
  **Midlothian, VA 23112 (US)**

(74) Representative: **Hucker, Charlotte Jane et al**
**Gill Jennings & Every**
**Broadgate House,**
**7 Eldon Street**
**London EC2M 7LH (GB)**

(56) References cited:
**EP-A- 0 295 561**
**EP-A- 0 472 912**
**US-A- 4 659 777**
**US-A- 4 937 277**
**US-A- 4 987 203**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 703 938 B1

Printed by Jouve, 75001 PARIS (FR)

## Description

BACKGROUND OF THE INVENTION

The present invention relates to a novel polydiorganosiloxane-modified polymer, particularly a copolymer of a polydiorganosiloxane and a fiber-forming polymer.

There have been numerous disclosures of the use of specially tailored polysiloxanes in conjunction with other polymers. For example, U.S. Pat. No. 4,640,962 describes a polyester resin, and a polyester fiber made from that resin, that includes siloxane block polymer units in the polyester matrix. The siloxane block polymer units migrate to the surface of the polyester fiber during its formation so as to provide a silicon-sheathed polyester fiber.

U.S. Pat. No. 4,663,413 describes a linear polysiloxane-polylactone block copolymer which is miscible with base polymers, particularly nylon. Blending of the polysiloxane-polylactone block copolymer with the base polymer imparts desirable surface properties to the base polymer.

U.S. Pat. No. 4,987,203 describes a polyorganosiloxane which contains a fluorinated substituent at its $\alpha$-terminal position and a substituent having an epoxy linkage at its $\omega$-terminal position. This modified polyorganosiloxane can be chemically grafted onto a synthetic resin such as polyamide via a bond between the epoxy linkage and a group in the synthetic resin reactive with the epoxy linkage.

U.S. Pat. No. 5,070,168 describes a silicone polymer which includes an ether amino pendant group. The polymers deposit on substrate surfaces via the pendant group to form surface-modifying features.

The use of polysiloxanes as fiber surface treating compositions is also known. For example, U.S. Pat. No. 4,459,382 describes treating a fiber substrate with a composition comprising a liquid carrier, a first polydiorganosiloxane containing at least two epoxy-containing organic radicals and a second polydiorganosiloxane selected from the group consisting of polydiorganosiloxanes containing at least two amino-containing hydrocarbon radicals and at least one polyalkyleneoxide radical and polydiorganosiloxanes containing at least two carboxy-containing hydrocarbon radicals and at least one polyalkyleneoxide radical. This composition is said to confer upon the fibers enhanced antistatic properties, water absorbency, stain resistance, softness, smoothness, crease resistance and compression recovery.

A related disclosure which concerns the incorporation of polysiloxanes into base polymers is copending, commonly assigned U.S. Application Ser. No. 502,216, filed March 30, 1990. This application describes a polymeric release film comprising a blend of a base polymer and a copolymer additive, the copolymer additive comprising a hard segment polymer component and a soft segment polymer component, one of the soft segment components being a polydiorganosiloxane.

A significant limitation in the prior art concerning the modification of base polymers via the reactive incorporation of polysiloxanes, however, is the limited flexibility in selecting the specific reactive sites and amounts of the siloxane functional group relative to the backbone chain of the base polymer. For example, the polyorganosiloxane disclosed in U.S. Pat. No. 4,987,203 permits the attachment of only one base polymer chain per polydiorganosiloxane molecule since each polydiorganosiloxane molecule only includes one epoxy group which is positioned at its $\omega$-terminal end. One result of this limited reactive site is a reduction in reactive probability and the consequential tendency towards increased amounts of unreacted polydiorganosiloxane. A need therefore exists for a more flexible method of incorporating polydiorganosiloxanes into base polymers which provides a wider range and more selectivity in controlling bonding locations and amounts for the siloxane functionality.

Moreover, although the prior art attributes many advantages to the use of polydiorganosiloxanes, there remains a significant need for further improvement in the properties of polymer products that have been modified by the incorporation of or treatment with polydiorganosiloxanes, particularly with regard to the processing of such polymer products. The incorporation of the polydiorganosiloxanes also should be simplified so that a wide variety of base polymers can be modified simply by adding the polydiorganosiloxane after the base polymer has already been synthesized.

SUMMARY OF THE INVENTION

It is therefore an object of the present invention to provide an efficient and versatile method for incorporating a polydiorganosiloxane into a base polymer to impart improved properties to the base polymer, especially with respect to the processing of the base polymer into a useful product.

In accomplishing the foregoing objects there is provided according to the present invention a copolymer of a polydiorganosiloxane and a base polymer according to claim 1 or to claim 2, comprising a structure represented by the following formula A:

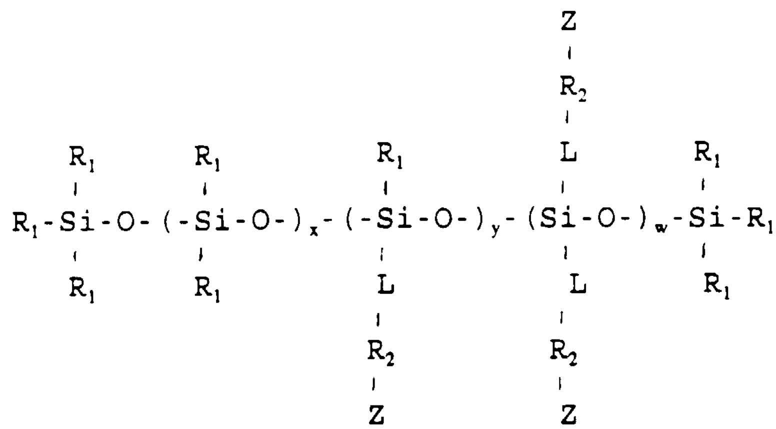

(A)

wherein each of

$R_1$ is the same or different and is selected from the group consisting of alkyl, aryl, cycloalkyl, aralkyl, fluoroalkyl, perfluoroalkyl, fluoroaryl, perfluoroaryl, fluoroaralkyl, perfluoroaralkyl, alkyl ether, aryl ether, perfluoroalkyl ether and perfluoroaryl ether;
L is a divalent linking radical selected from the group consisting of alkylene, arylene, cycloalkylene, aralkylene, fluoroalkylene, perfluoroalkylene, fluoroarylene, perfluoroarylene, fluoroaralkylene, perfluoroaralkylene, alkylene ether, arylene ether, perfluoroalkylene ether, perfluoroaralkylene ether, amino alkylene, amino arylene, amino cycloalkylene, amino aralkylene, amino fluoroalkylene, amino perfluoroalkylene, amino fluoroarylene, amino perfluoroarylene, amino fluoroaralkylene, amino perfluoroaralkylene, amido alkylene, amido arylene, amido cycloalkylene, amido aralkylene, amido fluoroalkylene, amido perfluoroalkylene, amido fluoroarylene, amido perfluoroarylene, amido fluoroaralkylene, amido perfluoroaralkylene, keto alkylene, keto arylene, keto cycloalkylene, keto aralkylene, keto fluoroalkylene, keto perfluoroalkylene, keto fluoroarylene, keto perfluoroarylene, keto fluoroaralkylene and keto perfluoroaralkylene ;
$R_2$ is as defined in claim 1
Z is as defined in claim 1;
x is 0 to 2000;
y and w are as defined in claim 1 or in claim 2; and the

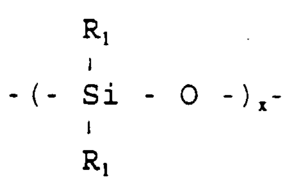 , 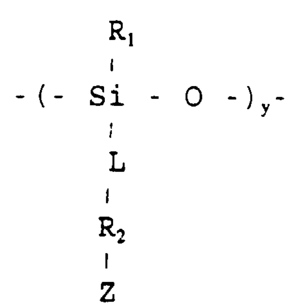 , and 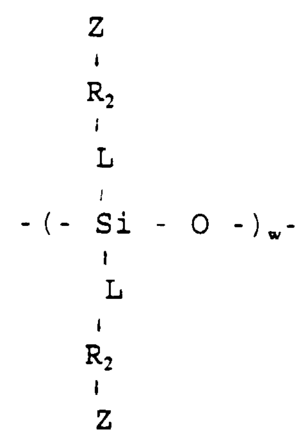

units of formula A are arranged-in a random or a block structure.

In a preferred embodiment of the present invention there is provided a base polymer according to claim 5 or to claim 6 comprising a plurality of polymer chains, wherein at least one of the polymer chains forms a copolymer with a polydiorganosiloxane, the polydiorganosiloxane having a structure represented by the formula B:

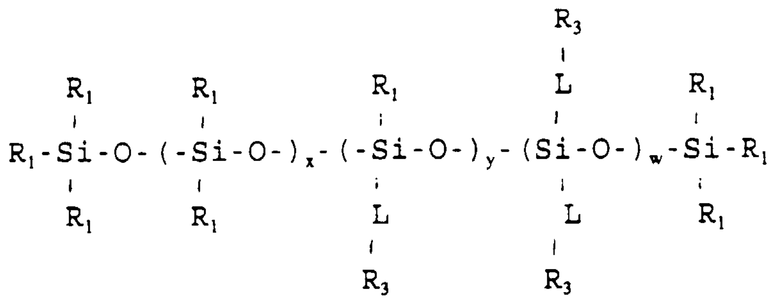

(B)

wherein each of

$R_1$ is the same or different and is selected from the group consisting of alkyl, cycloalkyl, aryl, aralkyl, fluoroalkyl, perfluoroalkyl, fluoroaryl, perfluoroaryl, fluoroaralkyl, perfluoroaralkyl, alkyl ether, aryl ether, perfluoroalkyl ether and perfluoroaryl ether;
L is a divalent linking radical selected from the group consisting of alkylene, arylene, cycloalkylene, aralkylene, fluoroalkylene, perfluoroalkylene, fluoroarylene, perfluoroarylene, fluoroaralkylene, perfluoroaralkylene, alkylene ether, arylene ether, perfluoroalkylene ether, perfluoroaralkylene ether, amino alkylene, amino arylene, amino cycloalkylene, amino aralkylene, amino fluoroalkylene, amino perfluoroalkylene, amino fluoroarylene, amino perfluoroarylene, amino fluoroaralkylene, amino perfluoroaralkylene, amido alkylene, amido arylene, amido cycloalkylene, amido aralkylene, amido fluoroalkylene, amido perfluoroalkylene, amido fluoroarylene, amido perfluoroarylene, amido fluoroaralkylene, amido perfluoroaralkylene, keto alkylene, keto arylene, keto cycloalkylene, keto aralkylene, keto fluoroalkylene, keto perfluoroalkylene, keto fluoroarylene, keto perfluoroarylene, keto fluoroaralkylene and keto perfluoroaralkylene;
$R_3$ is as defined in claim 5;
x is 0 to 2000;
y and w are as defined in claim 5 or in claim 6; and the

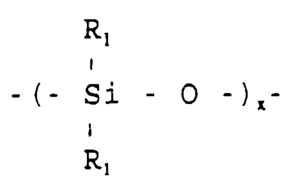
,
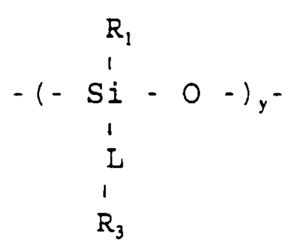
, and
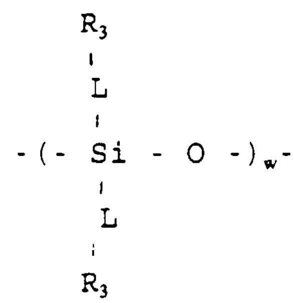

units of formula B are arranged in a random or a block structure.

There also is provided according to the present invention a process for incorporating a polydiorganosiloxane into a base polymer comprising the steps of:

(a) contacting a base polymer having a terminal or a pendant functional group with a polydiorganosiloxane having a structure as defined in claim 5 or in claim 6; and
(b) subjecting the resultant mixture to a reactive condition so that a chemical bond forms between the terminal or

pendant functional group of the base polymer and $R_3$ of the polydiorganosiloxane.

A preferred embodiment of the process of the present invention is a process for forming a polymeric fibrous structure comprising a plurality of polymer chain segments, the process comprising the steps of:

(a) mixing a plurality of polymer chain segments, each chain segment having at least one terminal or pendant functional group; with a polydiorganosiloxane having a structure as defined in claim 5 or in claim 6; and
(b) melt extruding the resultant mixture to form a fibrous structure and chemically bond $R_3$ and the terminal or pendant functional group of at least one of the polymer chains.

According to a further aspect of the present invention there is provided a process for applying a finish to a polymeric fibrous substrate comprising applying finish in a liquid state to said polymeric fibrous substrate and then drying the resultant finish-coated polymeric substrate so that up to about 0.3 weight % of the finish in a solid state remains on the polymeric fibrous substrate, based upon the weight of the polymeric fibrous substrate. Preferably, the polymeric fibrous substrate is modified to include a copolymer of formula A.
Further objects, features and advantages of the present invention will become apparent from the detailed description of preferred embodiments that follows.

BRIEF DESCRIPTION OF THE DRAWING

The invention will be described in more detail below with reference to the drawing, wherein:

Figure 1 is an elevation view of an apparatus used to measure a property of the invention;
Figure 2 is a graphic representation of the melt viscosities of the polydiorganosiloxane modified-polymer of the invention and an unmodified base polymer;
Figure 3 is a graphic representation of soiling of carpets made from polydiorganosiloxane-modified pigmented nylon 6 fibers of the invention and from unmodified pigmented nylon 6 fibers.

DETAILED DESCRIPTION OF THE INVENTION

As used herein, the term "base polymer" denotes a polymer to which the polydiorganosiloxane is added resulting in the formation of a polydiorganosiloxane/base polymer copolymer. It is the properties of the base polymer which the addition of the polydiorganosiloxane is intended to modify.
"Polymer chain" denotes the linear chain of recurring monomer units which forms the backbone of the base polymer.
"Graft copolymer" denotes a copolymer wherein the base polymer chain segments are grafted onto the polydiorganosiloxane chain in random or block order. In other words, the -L-$R_2$- bonding sites are distributed in random or block order along the polydiorganosiloxane chain according to the general formula

```
....XXXXXXXXXX....    or   ....XXXXXXXXX....
      |     |                    |||
      Y     Y                    YYY
      |     |                    |||
      Y     Y                    YYY
      |     |                    |||
      Y     Y                    YYY

      .     .                    ...
     (random)                  (block)
```

The random structure is preferred since it permits the variation of structural parameters such as the effective molecular weight between the reactive Si sites depending upon the desired properties of the copolymer. The more regular spacing between the -L-$R_2$- bonding sites also allows for more uniform variation of the effective molecular weight.
"Polymeric fibrous structure" denotes a polymer or copolymer which has been formed into a continuous filament (single or multiple) of a running or extremely long length, or cut or otherwise short fiber known as staple, or a material which includes such a formed polymer or copolymer. An example of a polymeric fibrous structure is a textile component such as a tape, fiber, yarn or other profile which typically has been tufted, woven, or otherwise constructed into fabric suitable for final use in home furnishings, particularly as floor covering or upholstery fabric. Another example

is a tape, fiber, yarn or other profile which has been woven into a fabric for use in seatbelts. A further example is a tape, fiber, yarn or other profile which has been constructed into cord used for reinforcing tires.

"Polyamide" denotes nylon 6, nylon 66, nylon 4, nylon 12 and other polymers containing the

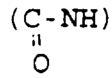

structure along with the $(CH_2)_x$ chain as described in Cook, J., Handbook of Textile Fibres, Merrow Publishing Co., pp. 194-327 (1984). Nylon 6 and 66 are preferred.

"Polyester" denotes polyethylene terephthalate (PET), polybutylene terephthalate (PBT), polyethylene napthalate (PEN), polyalkylene adipate, polyesters of dihydric phenols, liquid crystal polymers and other polymers containing the ester repeating unit as described in Encyclopedia of Polymer Science and Engineering, Vol. 12., pub. by John Wiley & Sons, Inc., pp. 1-300 (2d ed. 1989).

It has been discovered that a polydiorganosiloxane additive can be incorporated easily into a base polymer so as to modify the properties of the base polymer. The incorporation occurs via a copolymerization reaction between the polydiorganosiloxane and the base polymer. Due to the versatility of this invention, the amount of the polydiorganosiloxane additive incorporated into the base polymer can be carefully controlled.

The polydiorganosiloxane portion of the copolymer of the present invention is based upon a polydiorganosiloxane structure, preferably linear, comprised of repeating units of $-Si(R_1)_2-O-$. Each of the $R_1$ substituents can be the same or different and generally can be any aliphatic, aromatic, alicyclic or heterocyclic radical. Among the more useful $R_1$ substituents are alkyl, aryl, cycloalkyl, aralkyl, fluoroalkyl, perfluoroalkyl, fluoroaryl, perfluoroaryl, fluoroaralkyl, perfluoroaralkyl, alkyl ether, aryl ether, perfluoroalkyl ether and perfluoroaryl ether. The alkyl, fluoroalkyl, perfluoroalkyl, alkyl ether and perfluoroalkyl ether groups can be straight- chained or branched and preferably contain 1 to 25, especially 1 to 10, carbon atoms. The aryl, fluoroaryl, perfluorary1, aryl ether and perfluoroaryl groups preferably contain 1 to 3 $C_6$ rings which may be substituted. The cycloalkyl group preferably contains 3 to 15 carbon atoms. The aralkyl, fluoroaralkyl and perfluoroaralkyl groups preferably contain 7 to 15 carbon atoms. Methyl and trifluoromethyl are particularly preferred for the $R_1$ groups attached to the repeating silicon atoms. Attachment of a methyl group to the repeating silicon atoms is advantageous due to its lower surface energy which contributes to the lubricity of the copolymer during processing. An alkyl, especially methyl, is particularly preferred for the $R_1$ groups attached to the terminal silicon atoms. The fluoro radicals are advantageous due to their ability to enhance soil removal from fibrous structures which include the copolymer.

The production of linear polydiorganosiloxanes is well known in the art and is described, for example, in Encyclopedia of Polymer Science and Engineering, Vol. 15, pub. by John Wiley & Sons, Inc., pp. 234-258 (2d ed. 1989) and the references cited therein. For utilization in the present invention, however, conventional linear polydiorganosiloxanes must be modified so that at least one of the silicon atoms includes a reactive site (i.e., $-L-R_3-$) for the base polymer. Preferably, a plurality of the silicon atoms include a reactive site. Each silicon atom can have one or two reactive sites bonded to it. The types of reactive site groups in each modified polydiorganosiloxane molecule can be the same or different.

The linking group, -L-, can be any divalent radical that is derived from a hydrosilylation reaction between a siloxane or silane monomer and a precursor compound that includes at least one unsaturated bond in a reactive position so that a carbon-silicon bond is formed between the siloxane or silane and the precursor compound. Preferably, the precursor compound includes a vinyl group, more preferably an allyl or allyloxy group. Illustrative of divalent radicals that can serve as linking groups, -L-, are alkylene (such as methylene ($-CH_2-$), ethylene ($-CH_2-CH_2-$), propylene ($-CH_2-CH_2-CH_2-$), $C_4$ to $C_{15}$ methylene), arylene (such as phenylene), cycloalkylene, aralkylene, fluoroalkylene, perfluoroalkylene, fluoroarylene, perfluoroarylene, fluoroaralkylene, perfluoroaralkylene, alkylene ether, arylene ether, perfluoroalkylene ether, perfluoroaralkylene ether, amino alkylene, amino arylene, amino cycloalkylene, amino aralkylene, amino fluoroalkylene, amino perfluoroalkylene, amino fluoroarylene, amino perfluoroarylene, amino fluoroaralkylene, amino perfluoroaralkylene, amido alkylene, amido arylene, amido cycloalkylene, amido aralkylene, amido fluoroalkylene, amido perfluoroalkylene, amido fluoroarylene, amido perfluoroarylene, amido fluoroaralkylene, amido perfluoroaralkylene, keto alkylene, keto arylene, keto cycloalkylene, keto aralkylene, keto fluoroalkylene, keto perfluoroalkylene, keto fluoroarylene, keto perfluoroarylene, keto fluoroaralkylene and keto perfluoroaralkylene radicals. By "divalent radical" is meant a radical that has at each terminal end a bond to another non-hydrogen atom. Accordingly, "alkylene" is used herein as indicating such terminal bonds rather than as indicating that the linking radical, -L-, includes an unsaturated bond. By "amino" is meant a divalent radical that includes -NH- as well as the linking carbon atoms. By "amido" is meant a divalent radical that includes -NHC(O)- as well as the linking carbon atoms. By "keto" is meant a divalent radical that includes -C(O)- as well as the linking carbon atoms.

The alkylene, fluoroalkylene, perfluoroalkylene, alkylene ether and perfluoroalkylene ether groups and their

amino, amido and keto counterparts preferably contain 1 to 15 carbon atoms and can be branched or unbranched. The arylene, fluoroarylene, perfluoroarylene and arylene ether groups and their amino, amido and keto counterparts preferably contain 1 to 3 $C_6$ rings which may be substituted. The cycloalkylene group and its amino, amido and keto counterparts preferably contains 3 to 10 carbon atoms. The aralkylene, fluoroalkylene, perfluoroaralkylene and perfluoroaralkylene ether groups and their amino, amido and keto counterparts preferably contain 7 to 15 carbon atoms. Particularly preferred are alkylene, alkylene ether and fluoroalkylene groups such as $(-CH_2-)_n$, $(-CH_2-)_n-O-CH_2-$and $(-CF_2-)_n$, wherein n is 1 to 15, preferably 3.

It has been found that if a polydiorganosiloxane is modified to include certain reactive radicals, $R_3$, the polydiorganosiloxane can be chemically attached to the terminal or pendant groups of a large variety of base polymer chains. The particular reactive radical depends in part upon the base polymer which is to be modified. In addition, the reactive radical should be selected so that the by-products of the copolymerization are inert in the sense that they do not degrade the resulting copolymer. Suitable $R_3$ reactive radicals include epoxy,

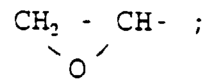

isocyanate radicals, O = C = N - ;
blocked or substituted isocyanate,

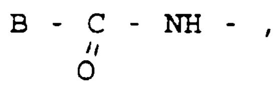

wherein B is caprolactam, phenol, ketoxime or a pyrazole;
oxazoline

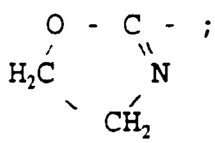

carbodiimide, $R_4 - N = C = N - R_4 -$ , wherein $R_4$ is a $C_1$ to $C_5$ alkyl or an aryl group;
anhydride,

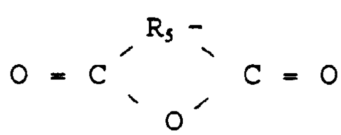

wherein $R_5$ is a polyalkylene or substituted polyalkylene radical, preferably dimethylene,

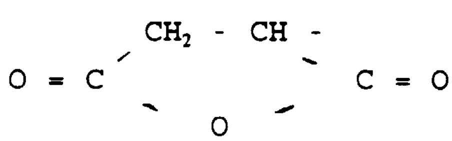

or alkyl dimethylene,

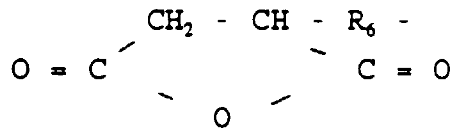

wherein $R_6$ is a $C_1$ to $C_5$ alkyl group;
and caprolactim ether,

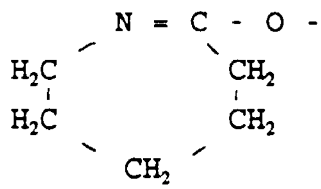

Particularly preferred are epoxy, blocked isocyanate and anhydride because of the efficiency of their reaction with the terminal or pendant groups of the base polymer.

The following modified polydiorganosiloxanes additives are especially preferred:

TABLE A

| Additive | $R_1$ | $R_3$ | L | x | y | w |
|---|---|---|---|---|---|---|
| A | $CH_3$ | epoxy | $-(CH_2)_3-O-CH_2-$ | 96.5 | 5.5 | 0 |
| B | $CH_3$ | epoxy | $-(CH_2)_3-O-CH_2-$ | 330 | 6.0 | 0 |
| C | $CH_3$ | epoxy | $-(CH_2)_3-O-CH_2-$ | 670 | 6.0 | 0 |
| D | $CH_3$ | isocyanate or blocked isocyanate | $(-CH_2-)_3$ | 670 | 6.0 | 0 |
| E | $CH_3$ | anhydride | $(-CH_2)_3$ | 1400 | 6.0 | 0 |

Additives A, B and C are commercially available and additives D and E could be obtained via conventional organic synthesis techniques.

As described above, the modified polydiorganosiloxane portion of the present invention can include up to three sets of repeating units

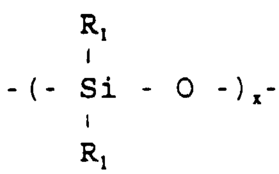 , 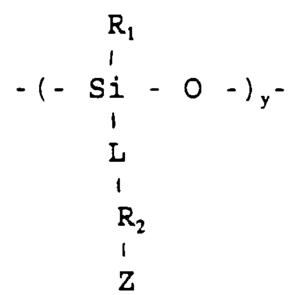 , and 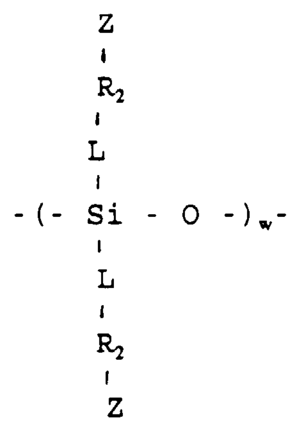

The subscript x can range from 0 to 2000, preferably 25 to 1500, and more preferably 100 to 1000. The subscripts y and w can each, individually, range from 0 to 20, preferably 1 to 10, and more preferably 2 to 6, provided y and w are not both 0. The effective molecular weight between the silicon reactive sites, $-L-R_3-$, is controlled based upon the respective mole percents of the reactants used to produce the modified polydiorganosiloxane. In other words, the specific amounts for the subscripts x, y and w are dependent upon the relative molar amounts of the reactants.

The polydiorganosiloxane of formula B may be produced by a two step method comprising hydrosilylation and hydrolysis/condensation. The hydrosilylation step serves to attach the reactive radicals, $R_3$, to the silicon atom

and the hydrolysis/condensation step serves to form the polydiorganosiloxane backbone chain. The hydrosilylation can be performed before or after the hydrolysis/condensation, but it is preferred to perform the hydrosilylation after hydrolysis/condensation.

Conventional hydrosilylation techniques are described in Chojo et al., 186 Macro. Chem., pp. 1203, 1211 (1985); Chojo et al., 19 Polymer Bulletin, p. 613 (1988); Crivello et al., 28 Journal of Polymer Science, Part A: Polymer Chemistry, p. 479 (1990); Crivello et al., 30 Journal of Polymer Science, Part A: Polymer Chemistry, pp. 1-11 (1992); U.S. Pat. No. 4,467,082; Speier, 17 Advanced Organometal Chemistry, p. 407 (1979); and Ojima et al., Reviews on Silicon, Germanium, Tin, and Lead Compounds, Vol. 5, No. 1, pp. 7-66 (1981). In general, a $R_1$-hydrogen siloxane unit,

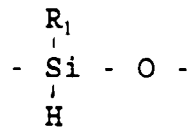

or $R_1$-hydrogen silane unit,

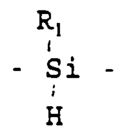

is dissolved in dry tetrahydrofuran (THF) and $10^{-6}$ M of catalyst (based on siloxane or silane content) is also added. A C=C bond-containing reactant, preferably a vinyl-containing reactant, is dissolved in dry THF in molar proportions based on siloxane or silane content and added dropwise to the siloxane or silane solution, with constant stirring under an inert nitrogen atmosphere. Once addition is complete, stirring is continual at room temperature for two hours. The solution then is heated to a gentle reflux for an additional 2-30 hours (depending upon the double bond-containing reactant) until disappearance of the Si-H bond as determined by infra-red spectroscopy. The solvent then is removed to obtain the product. It should be recognized that a dihydric siloxane or silane unit also could be used, thus permitting the addition of two C=C bond-containing reactants to one silicon atom.

In the context of this invention, hydrosilylation is effected by reacting the siloxane or silane with a carbon double bond-containing, preferably a vinyl-containing, precursor of $-L-R_3$. The carbon double-bond containing precursor of $-L-R_3$ can be formed as described in Allen and Gates, Organic Synthesis, Vol. 3, pp. 418-421; U.S. Pat. No. 4,467,082; and U.S. Pat. No. 4,278,804, all incorporated herein by reference. In general, a compound that contains one of the possible $R_3$ groups is reacted with a vinyl-containing compound, $CH_2=CH-W-Y$, where W is optional and is an alkyl, aryl or aralkyl and Y is any radical capable of reacting with the $R_3$-containing compound. If W is present it preferably is an alkyl containing 1 to 6 carbon atoms, preferably 1, or an alkyl phenylene containing 1 to 6 carbon atoms in addition to the 6 aromatic carbon atoms. Illustrative of possible radicals for Y include isocyanato, glycidyl ether, halogen, hydroxy, carboxyl, amino and mercapto. The vinyl-containing compound, thus, is the precursor of the linking group L.

If the hydrosilylation is carried out first, a silane unit is used as the starting reactant and has a preferred structure of:

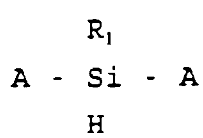

wherein A is a halogen such as chloride, a carboxy such as acetoxy, a hydroxy or an alkoxy. The silane unit could also be dihydric. When this silane unit undergoes hydrosilylation the hydrogen is replaced by the C=C bond-containing reactive group to form a structure of

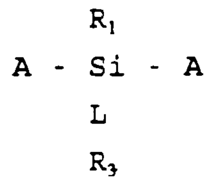

A mixture of the following silane units then undergoes hydrolysis/condensation to form the polydiorganosiloxane of formula B:

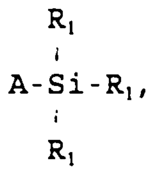,
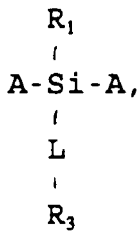,
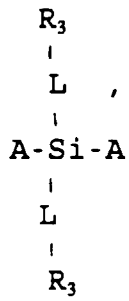,
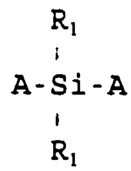

In general, the individual silane reactants are dissolved in toluene or THF so that all the reactants together constitute about 30% by weight of the solution. Water is added and the solution is stirred for 2-6 hours at room temperature and at 60-70°C for another 2-6 hours. The amount of water added can vary depending upon the functionalities present and the rates of condensation desired. The solution is then cooled, and the solvent removed under reduced pressure and the resulting siloxane is isolated. This hydrolysis/condensation synthesis is described in Noll, W., Chemistry and Technology of Silicones, pub. by Academic Press (1968).

If the hydrosilylation is performed second, a mixture of

$(R_1)_3SiA$, 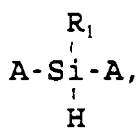, and $ASi(R_1)_3$

is hydrolyzed/condensed following the above-described procedure to form a polydiorganosiloxane having a structure of

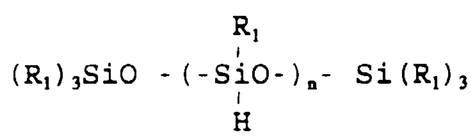

This polydiorganosiloxane then undergoes hydrosilylation to attach the -L-$R_3$ groups to the silicon atoms.

Each repeating unit can occupy any position along the backbone chain of the polydiorganosiloxane. For example, the backbone chain could consist of 3 x units, followed by 1 w unit, followed by 5 x units, followed by y 2 units.

The modified polydiorganosiloxane can be reacted with a wide variety of base polymers to form a copolymer. A mixture of different modified polydiorganosiloxanes can be added to a base polymer. Any base polymer that has a terminal or pendant group that can react with the reactive radical $R_3$ of the polydiorganosiloxane to form a copolymer can be used in this invention. Particularly suitable types of polymers, Z, are those that include carboxyl, amino and hydroxy terminal or pendant groups such as polyamide, polyester, polyurea, polyimide, polycarbonate, polyether, polyarylate, polyester ether, telechelic functionalized polystyrene and telechelic functionalized polyolefin. Since the polyolefins and polystyrenes do not include terminal groups that could react with the reactive groups $R_3$, they must first be modified by known methods such as graft polymerization to include a side chain that includes a pendant group such as carboxyl, amino or hydroxy before they can react with the polydiorganosiloxane. The pendant group reacts with $R_3$.

A significant advantage of the invention is that it does not require the simultaneous formation of the base

polymer and the base polymer/polydiorganosiloxane copolymer. In other words, the repeating monomeric structure of the base polymer chain remains intact during formation of the copolymer of the invention. This unique feature permits the initial production of the base polymer and then, at a later time and/or location, the base polymer can by modified by reacting the polydiorganosiloxane additive with the base polymer to form the copolymer.

The copolymer structure resulting from the reaction of the polydiorganosiloxane and the base polymer is represented by previously depicted formula A. According to this formula, $R_2$ represents the bonding structure which forms as a result of the copolymerization. The $R_2$ structure depends upon the particular base polymer and the reactive radical or precursor $R_3$ which modifies the polydiorganosiloxane that reacts with the base polymer. Illustrative of the bonding structure between the base polymer and the polydiorganosiloxane are the following copolymers that will form with nylon as the base polymer (wherein Ny represents the repeating monomeric units of nylon):

$R_3$ is an epoxy group:

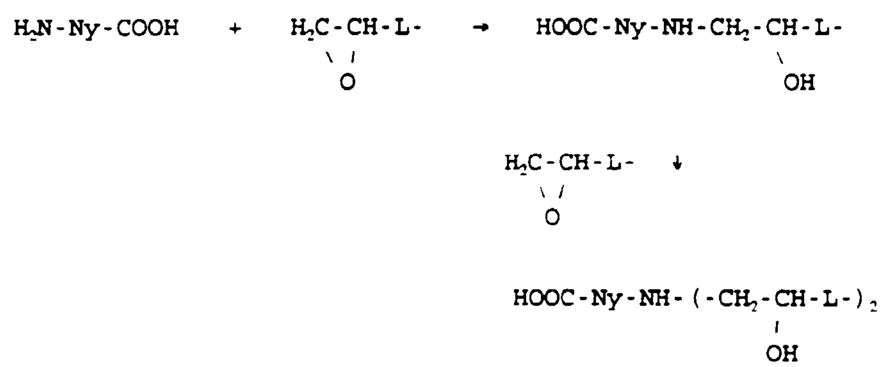

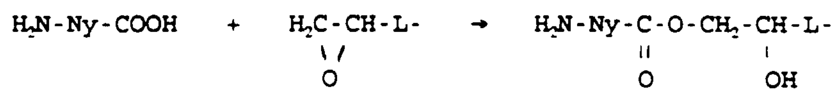

$R_3$ is an isocyanate group:

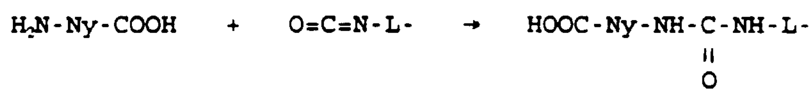

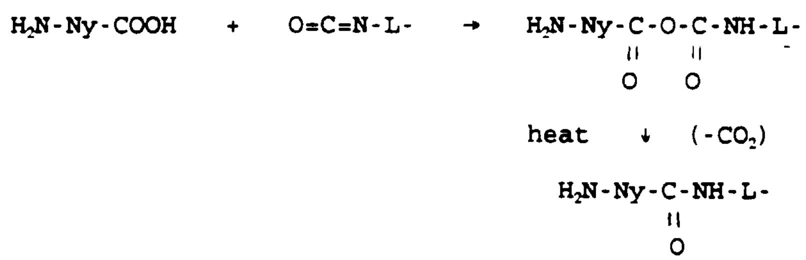


$R_3$ is a blocked isocyanate:

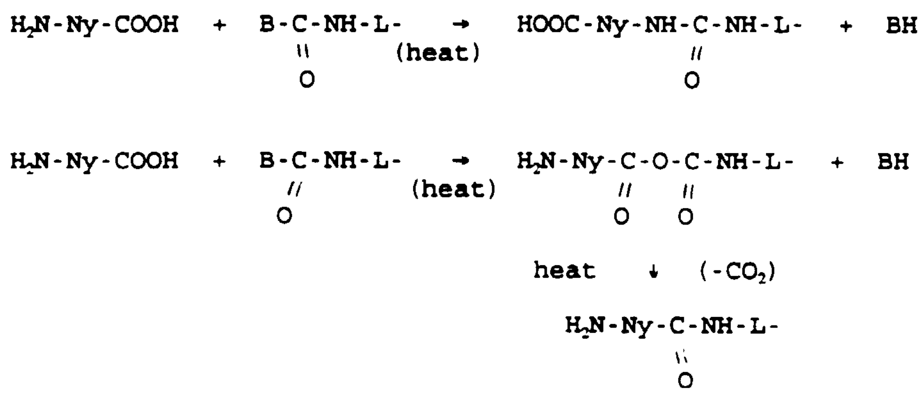


$R_3$ is an oxazoline group:

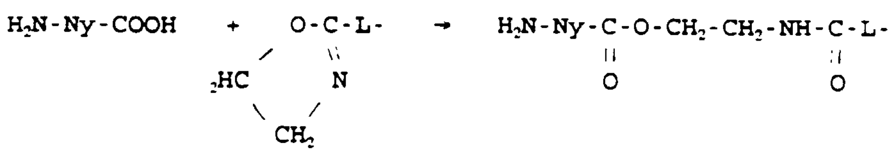

$R_3$ is a carbodiimide group:

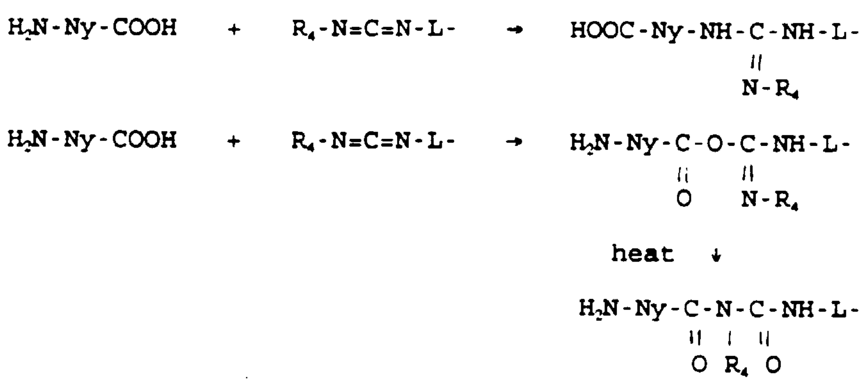


$R_3$ is a succinic anhydride group:

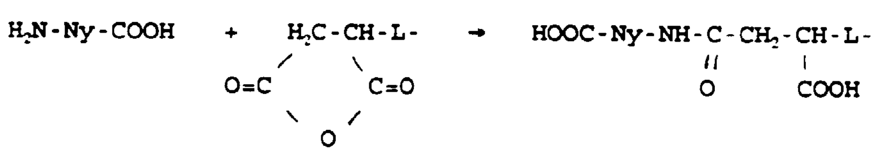

$R_3$ is a caprolactim ether group

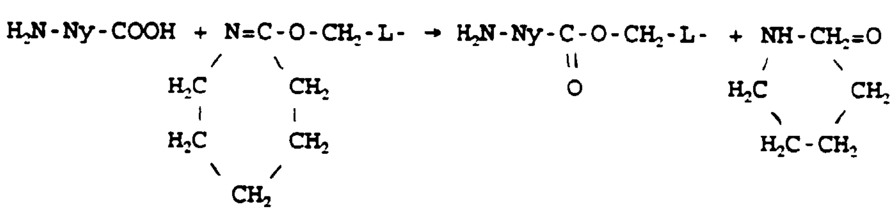

As can be seen from above, both the amino and carboxyl terminal groups of nylon react with the illustrated reactive radicals, but in some instances, such as where $R_3$ is an oxazoline, succinic anhydride or caprolactim ether, the reaction with one of the terminal groups is faster than with the other terminal groups.

In a similar fashion, the carboxyl and hydroxy terminal group of a polyester, particularly polyethylene terephthalate, will react with the reactive radicals to form copolymers. For example, when $R_3$ is an epoxy group the following copolymer is formed (wherein PE represents the repeating monomeric units of polyester) :

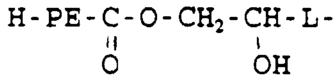

Likewise, the hydroxy terminal group of a polyarylate will react with the reactive radicals to form copolymers. For example, when $R_3$ is an epoxy group the following copolymer will form (wherein PA represents the repeating monomeric units of polyarylate):

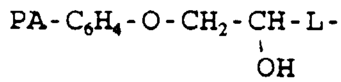

In the case of polyolefins, the backbone chain must include a side chain which has pendant groups that can react with the reactive radicals $R_3$ or a telechelic polyolefin that includes terminal groups that can react with the reactive radicals $R_3$ must be used. For example, polypropylene could be copolymerized with acrylic acid to form a side chain which includes carboxylic acid pendant groups br polypropylene could be copolymerized with maleic anhydride to form a side chain which includes anhydride pendant groups.

Particularly preferred as the base polymer are the fiber-forming polymers such as polyamide, especially nylon 6 and nylon 66, and polyester, especially PET, PEN and PBT. When the fiber-forming polymers used to make fibrous structures, such as carpet or tire yarn, are modified so that a portion of the fiber-forming polymer chains are copolymerized with the reactive polydiorganosiloxane, surprising processing advantages are achieved. Furthermore, by enabling the polydiorganosiloxane to be chemically anchored in the base polymer via the bonding occurring at the $R_3$ reactive sites, the advantageous properties conferred by the siloxane functionalities are not lost during processing or use.

Typically, the amount of modified polydiorganosiloxane reacted with the base polymer is such that the number of reactive sites (-L-$R_3$) are lower than the number of base polymer terminal groups. Accordingly, not all of the base polymer chains react with a polydiorganosiloxane to form a copolymer. On the other hand, substantially all of the polydiorganosiloxane reacts with the base polymer. In general, about 0.05 to 95, preferably about 0.2 to 25, more preferably about 0.5 to 5, weight% polydiorganosiloxane is added to the base polymer, based upon the weight of the total mixture. If the base polymer is a polyamide or a polyester, preferably about 0.2 to 5 weight % polydiorganosiloxane is added. Adding an amount of polydiorganosiloxane in the lower portion of this weight % range, approximately 0.2 to 3 weight %, will provide the processing advantages which are described in detail below. Adding an amount of polydiorganosiloxane in the upper portion of this weight % range, approximately about 0.2 to 5 weight %, will provide the end use properties which are described in detail below.

The base polymer can also include additives such as pigments, light stabilizers, flame retardants, optical brighteners, antistatic agents, surfactants and soil release agents.

The modified polydiorganosiloxane and the base polymer are reacted together so that copolymerization or bonding occurs between a terminal functional group of the base polymer and the reactive radical or site of the polydiorganosiloxane. Any reaction system can be used to effect the copolymerization such as solution polymerization with catalysts or grafting polymerization by coating a polymer substrate with a solution of the polydiorganosiloxane, but the preferred system is melt extrusion. The particular reaction conditions at which this copolymerization occurs vary depending upon the specific reactive groups and base polymers selected.

It is important to recognize that the linking group, -L-, must be inert during copolymerization of the polydiorganosiloxane and the base polymer. Accordingly, the linking group, -L-, cannot include any functionality which would react with the terminal group of the base polymer because such a reaction would result in the cleavage of the reactive radical, $R_3$, from the polydiorganosiloxane. For example, the linking group cannot include an ester linkage because an ester would react with the amine terminal group of polyamide base polymer or with the carboxyl terminal group of a polyester base polymer.

In the case of melt extrusion, the extrusion temperature should be about 10 to 50°C, preferably 10 to 30°C, higher than the melting point of the base polymer. The extrusion can be carried out in either a single or twin screw

extruder. The polydiorganosiloxane and the base polymer can be preblended in that chips or pellets of the polydiorganosiloxane and the base polymer can be mixed prior to melting. Alternatively, an on-line addition can be used in that the polydiorganosiloxane is added to the already molten base polymer. The following examples illustrate the process used to produce the copolymers of the present invention.

Copolymerization via Reactive Extrusion - Polyamide Example

Nylon 6 chips are dry blended with 3 weight % (based on the weight of the total mixture) of liquid polydiorganosiloxane additive C (see Table A). The resultant blend is dried at 80-120°C in a vacuum oven for 16 hours. The blend is cooled, tumbled again for 5 minutes and fed into a hopper of a twin screw extruder. Melt extrusion is carried out at 250-270°C and the extrudate is pulled into strands, quenched in a water trough and pelletized. The pellets are dried in a vacuum oven at 80-120°C for 16 hours. After this extrusion procedure, the epoxy groups of the modified polydiorganosiloxane have bonded with the terminal groups of the nylon 6 chains.

To obtain a fiber, the pellets produced by the extrusion procedure are fed into a hopper of a twin screw extruder which has a continuous nitrogen flow and re-melted. During this re-melting any unreacted polydiorganosiloxane may react with the nylon 6. The molten polymer leaving the extruder is fed into a metering pump, a filter pack and then through a spinneret. The extruding and spinning steps take place at 250-270°C. The fiber produced from the spinneret is drawn and jet textured according to conventional procedures. The draw ratio is 2.8:1.

Copolymerization via Reactive Extrusion - Polyester Example

PET chips are dry blended with 3 weight % (based on the weight of the total mixture) of liquid polydiorganosiloxane additive A (see Table A). The resultant blend is dried overnight at 160°C and then extruded on a twin screw extruder at 290°C. The extrudate is pulled into strands, quenched in a water bath, pelletized, and dried at 160°C in a vacuum oven. After this extrusion procedure, the epoxy groups of the modified polydiorganosiloxane have bonded with the carboxylic acid terminal groups of the PET chains.

To obtain a fiber, the pellets produced by the extrusion procedure are fed into a hopper of a twin screw extruder and re-melted at 290°C. The molten polymer leaving the extruder is fed into a metering pump, a filter pack and then through a 32 hole, round cross-section, spinneret. The spinning temperature is 290 °C and a heated sleeve is placed around the spinneret. The fiber produced from the spinneret is drawn at a 6:1 draw ratio.

Evaluation - Polyamide Examples

As mentioned previously, an important advantage associated with having a polydiorganosiloxane additive bonded to a base polymer relates to the processing of the base polymer into useful intermediate products such as fibers. The fibers are then constructed into end products such as carpet, tire cord or seat belts. During this subsequent processing of the fiber, the fiber surface frequently contacts metal surfaces causing friction which results in processing difficulties. Accordingly, it is desirable to reduce the fiber/metal interface friction as much as possible. The present invention achieves this reduction in fiber/metal friction due, in part, to the lubricity generated by the polydiorganosiloxane additive which, though securely attached to the base polymer, tends to migrate to the surface of the fiber. Because the polydiorganosiloxane additive is attached to the base polymer via the reactive formation of the copolymer, the polydiorganosiloxane does not exude out of the fiber and, therefore, the level of lubricity is not lost during subsequent processing.

Tests according to ASTM D3108 were performed on a series of nylon 6 multifilament fiber samples to determine their fiber/metal interface friction. Example 1 is a control sample of nylon 6 which does not include the polydiorganosiloxane additive. In Examples 2-7, the previously described polydiorganosiloxane additives (see Table A) were added to nylon 6 at the loading levels indicated in Table 1 and a copolymer filament was formed according to the melt extrusion process set forth above. The multifilament fibers of Examples 1-7 have round cross-sections and comprise 70 filaments each. The fiber sample, under a pre-tension of 40 g, was wrapped 180° around the surface of a 1/2 inch diameter stainless steel rod having a surface roughness of RMS 5 and conveyed at rates of 50, 100 and 200 meters/minute over the surface of the rod. The fiber/metal friction was measured on a Rothschild friction meter and the data is presented in Table 1.

This data clearly shows that the samples (Examples 2-7) which contain the polydiorganosiloxane/nylon copolymer according to the present invention exhibit a much lower fiber/metal friction than the control sample (Example 1) which has not been modified to include the copolymer. Since the fiber/metal friction is lower, the fiber-forming polymer will flow more freely through any subsequent fiber processing apparatus.

To confirm that the surface of the fibers are indeed modified by the presence of the migrated polydiorganosiloxane, the free fall contact angles of the nylon 6 fiber samples were measured according to the Wilhelmy method.

The Wilhelmy method is well known and involves introducing a single filament sample 1 into a beaker containing water 2, withdrawing the filament 1 from the water, and measuring the angle θ between the moving filament 1 and the curved, continuous layer or film of water 3 adhered to the surface of the filament as shown in Figure 1. The single filaments tested were obtained immediately after leaving the spinerette and before finish was applied. The significance of this test is that polydimethylsiloxane alone exhibits a free fall contact angle of 105°; unmodified nylon 6 (Example 1) exhibits a free fall contact angle of 70°. The free fall contact angle of each of the modified nylon 6 samples (Examples 2-7) is at least about 75°, preferably at least about 80°. Since the free fall contact angle of the modified nylon 6 samples (Examples 2-7) is higher than 70°, this indicates that the polydiorganosiloxane is on the surface of the fiber and is driving the free fall contact angle closer to 105°.

To test the enhanced flow characteristics of the fiber-forming polymer, the pot pressure (the pressure differential existing at the entrance to the filter between the metering pump and the spinneret) was measured during the production of the nylon 6 samples and the results are shown in Table 1. All the samples were measured at a polymer throughput of 23 grams/minute. The pot pressures for the samples containing a copolymer according to the invention are markedly lower than for the control samples which do not include the copolymer. Since less pressure needs to be applied by the metering pump to force the same amount of fiber-forming polymer through the apparatus, the friction between the fiber-forming polymer and the metal surfaces of the processing apparatus must be less for the samples containing the inventive copolymer. This apparent reduction in the viscosity of the polymer during processing is most likely caused by the presence of the silicon at the outer edge of the molten polymer. Operating at a lower pot pressure, of course, reduces the cost of manufacturing the fiber.

A further surprising advantage associated with the copolymer of the invention is that it allows spun fibers to be drawn and/or textured without the need for application of a separate finish or with an amount of finish lower than that conventionally employed, which conventional amount is typically 0.8 weight % measured as the total amount of solids of the finish on the fiber or yarn, based on the weight of the fiber or yarn (known as "FOY").

By "finish" is meant a composition which is conventionally applied to fibers (or the yarns produced from the fibers) during and/or after spinning to provide various characteristics to the fiber. Finishes can be applied by a number of well known methods including padding (immersion in the finish solution followed by squeezing to remove the excess), immersion in the finish solution, passage of the fiber or yarn over rollers which are coated with the finish solution, spraying, printing, foam application and vapor techniques. These methods all generally involve the application of the finish to the fiber or yarn in a liquid state and then removal of the liquid component of the finish (which removal is referred to herein as "drying") so that only solid components of the finish remain on the fiber. The drying of the finish-coated fiber usually is accomplished by subjecting the same to heat and/or a stream of pressurized gas such as air.

In general, any finish composition can be used in connection with this invention. Numerous finish compositions are known and typical components of such compositions are described, for example, in Needles, Textile Fibers, Dyes, Finishes, and Processes, pp. 193-211 (Noyes Publications 1986). The finish can be oil or water-based but is usually an aqueous emulsion or solution. Particularly common are oil-in-water emulsions which include a lubricant, an antistatic agent and an emulsifier. The lubricant and/or antistat is included in the finish to protect the spun fiber from fusion or breakage by controlling the fiber/metal friction between the fiber and the subsequent processing apparatus such as the machine guides, rollers, draw plates and texturing elements. Examples of oil-in-water emulsion finishes are described in U.S. Pat. Nos. 4,859,350; 4,800,117; 4,767,646; 4,816,336; and 4,725,371, all incorporated herein by reference. Another example of a possible component is a cohesive agent which can promote cohesion between the individual fibers to enhance the gathering of the fibers into a yarn bundle. Additional optional or auxiliary components include pH control agents, antioxidants, viscosity modifiers, wetting agents, bacteriocides and anticorrosive agents.

To demonstrate that a finish is not required for a yarn made of fibers that includes a copolymer according to the invention, a finish was applied to control Example 8 and to inventive Examples 9-11. The composition of the finish was 50 wt. % triglycerides of coconut oil, 40 wt. % ethoxylated castor oil and 10 wt. % ethoxylated phosphated alcohol. A finish was not applied to control Example 12 and inventive Examples 13-15. Control Examples 8 and 12 are nylon 6 multifilament fibers (70 filaments) which do not include a polydiorganosiloxane additive. In Examples 9-11 and 13-15, the indicated polydiorganosiloxane additive has been copolymerized with nylon 6 to form multifilament fibers (70 filaments) according to the melt extrusion example set forth above. The fibers of Examples 8-15 have a Y-shaped cross-section. Of course, the invention encompasses a fiber (or yarn) that includes the polydiorganosiloxane/base polymer copolymer even though a finish has been applied to the fiber (or yarn). This data is presented simply to show that a finish is not necessary.

With reference to Table 2, as expected the fiber/metal friction for the control Example 12 which did not include a finish is much higher, 180 g to 150 g, compared to the control Example 8 which did include a finish. Inventive Examples 13-15 which did not include a finish, however, remarkably demonstrated fiber/metal frictions (110, 106 and 101 g, respectively) even lower than the 150 g for the finished control Example 8. In fact, the fiber/metal frictions for Examples 13-15 are lower than those for the inventive Examples 9-11 which did include a finish. It is important to note, though, that the fiber/metal frictions are lower for inventive Examples 9-11 than for control Example 8, indicating that inclusion

of the copolymer significantly lowers the fiber/metal friction even if a finish is applied to the fibers.

In the case where a certain amount of finish is desired, the present invention allows for the use of a smaller amount of finish, specifically about 0.3 or less weight % FOY, than used conventionally because of the lower fiber/metal friction. One consequence of being able to produce polyamide fiber with a reduced amount of finish concerns the soiling resistance of the fiber, which is an important consideration when the polyamide fibers are used in carpet. To evaluate soiling, three different nylon 6 fiber carpets were prepared.

In inventive Example 20 a masterbatch was formulated by blending 2 weight % polydiorganosiloxane additive C with nylon 6, drying the blend in a vacuum oven at 80°C for 16 hours, extruding the dried blend on a 2 cm (0.8 inch) Welding Engineers twin screw extruder, quenching the extrudate ribbons in water and pelletizing the quenched ribbons. The pellets were again dried in a vacuum oven at 80°C to less than 0.04% water content. 54 kg (120 lbs.) of these masterbatch pellets were blended with 441 kg (971.94 lbs.) nylon 6, 74.29 lbs. silver pigment concentrate and 15 kg (33.77 lbs.) flame retardant concentrate. The resulting chip blend was extruded and spun into a 50 filament fiber having a total denier of 1250. A finish, having the same composition as applied to Examples 8-11, was applied to this fiber, which was then drawn, textured and tufted into level-loop carpet. The resulting carpet was cut into 23 cm (9 inch) x 36 cm (14 inch) samples.

In inventive Example 21, the process for Example 20 was repeated except 5 weight % of polydiorganosiloxane additive C was added to make the masterbatch pellets.

In comparative Example 22, fiber from nylon 6, a pigment concentrate and a flame retardant concentrate, and carpet containing this fiber, was made along the same lines as in Example 20 except that the polydiorganosiloxane-containing masterbatch pellets were not added.

Soiling of the carpets was evaluated as follows: Approximately 20 g of a soil mixture is placed on loop pile carpets positioned on each side of each 23 cm (9 inch) x 36 cm (14 inch) carpet sample. The soil is transferred by foot onto the carpet samples. The carpet samples are walked on for 1700 treads which is sufficient to imbed the soil but not cause texture change, which would impact apparent soiling. The soil mixture is prepared by ball milling a mixture of sand (32.5 wt.%), top soil (65.0 wt.%) and mineral oil (2.5 wt.%). The soiled samples are vacuumed (4 passes) with an upright beater bar vacuum prior to soiling measurements.

The degree of soiling was determined by the color difference, represented as dE(CIELAB), between the carpet samples prior to soiling and the carpet samples after soiling as calculated according to ASTM D2244-85. The color of the carpet samples was measured according to ASTM E308-85, using a Pacific Scientific color machine, a viewing geometry of 45°/0°, an observer angle of 10°, a D65 lighting source and a 10nm wavelength interval.

As shown in Table 4 and Figure 3, as the amount of finish, measured as weight % of total solids of the finish on the fiber ("FOY"), is decreased the soiling level of the carpet samples decreased, i.e., dE decreased. In particular, the soiling performance of the carpet samples made from fibers having a level of finish below the conventional level of about 0.8 % FOY - Example 20 having a % FOY of 0.19, Example 21 having a % FOY of 0.22, and Example 21 having a % FOY of 0.24 - show superior soiling resistance. Although carpets may be made using these low finish levels on the conventional fibers of Example 22, unacceptable static and fiber frictional properties would interfere substantially with continuous fiber-to-carpet processing. Accordingly, these conventional fibers would require additional finish resulting in inferior soiling resistance.

The modulus, tenacity, ultimate elongation and total shrinkage data also presented in Tables 1 and 2 show that the addition of the polysiloxane does not deteriorate the physical properties of the nylon 6 base polymer.

Evaluation - Polyester Examples

Tests were performed to confirm that polyester copolymerized with a modified polydiorganosiloxane also would exhibit the processing advantages shown to exist with polyamide. A control sample of PET multifilament (64 filaments) was produced and is labeled Example 16 in Table 3. In inventive Examples 17-19, the polydiorganosiloxanes were added to PET at the loading levels indicated in Table 3 and a multifilament copolymer fiber (64 filaments) was formed according to the melt extrusion process set forth above. Pot pressure and free fall contact angle tests as described previously were performed on Examples 16-19 and the results are listed in Table 3. It can be seen that the pot pressure of the samples which include the PET/polydiorganosiloxane copolymer are lower than the control sample, thus indicating that the polydiorganosiloxane acts to reduce the polymer/metal surface friction during processing of the polymer. The increase in the free fall contact angle confirms that the polydiorganosiloxane has indeed migrated to the fiber surface.

A further advantage of the present invention is that the presence of the copolymer assists in preventing the degradation of the molecular weight of the base polymer during processing. This feature is of particular importance with respect to the processing of polyester since polyester is more susceptible to molecular weight degradation. Three different tests were performed to confirm that the addition of a modified polydiorganosiloxane to a polyester (in this instance PET) assists in preventing the degradation of the molecular weight of the PET during processing.

The first test measured the number of free carboxyl terminal groups (in units of microequivalents/g) in Examples 16-19 present in the polymer at three stages - the original PET base polymer chips prior to addition of the polydiorganosiloxane and the first extrusion step of the process described above, the chips after the first extrusion step, and the polymer resulting after the second extrusion step (the free fall value). By "free carboxyl terminal groups" are meant the acid group,

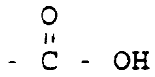

the concentration of can be calculated according to Pohl's Method described in Analytical Chemistry, Vol. 26, page 1614, October 1954. In particular, the concentration is determined by dissolving the polyester in a 70/30 o-cresol/chloroform mixture and titrating the solution with 0.05N KOH in methanol. The end point is determined potentiometrically. It was determined that the original PET chips had a carboxyl terminal group concentration of 20.2 meq/g. The results for the concentration of carboxyl terminal groups in the extruded chips and the polymer after processing are shown in Table 3. As expected, the number of carboxyl terminal groups increases at each stage of the processing indicating the occurrence of degradation. What is important, however, is that the amount of increase for the Examples 17-19 which include the polydiorganosiloxane additive is significantly less compared to the control Example 16. To emphasize this fact, the change in carboxyl group concentration between the original PET chips and the polymer after processing (free fall) is titled ΔCOOH and listed in Table 3. The carboxyl terminal group concentration in the control Example 16 increased by 33 meq/g, but the increase for the inventive Examples 17-19 was less than 20 meq/g. Since an increase in the number of carboxyl groups reflects degradation of the PET, the degree of degradation of PET which includes the polydiorganosiloxane is lower than PET without the polydiorganosiloxane.

The second test measured the intrinsic viscosity (I.V.) of Examples 16-19 at the same processing stages as in the carboxyl terminal group measurements. By the phrase "intrinsic viscosity" it is meant to describe the reduced viscosity of the polymer at zero concentration, which may be determined by measuring the flow times of a polymer solution after successive dilutions with fresh solvent, calculating the reduced viscosities, and extrapolating a plot of the reduced viscosities against concentration to zero concentration. The reduced viscosity is obtained from the expression:

$$\left[\frac{\text{Flow time of polymer solution}}{\text{Flow time of solvent}} - 1\right] \times \frac{1}{c}$$

where c is the concentration expressed as grams of polymer per 100 milliliter of solvent (g/dl). As used herein, the intrinsic viscosity was measured at 25°C, using a 60/40 mixture of phenol and tetrachloroethane as a solvent in a modified Ostwald viscometer.

The original PET chip displayed an I.V. of 0.95 g/dl. Since a lower I.V. indicates a greater amount of polymer degradation, the I.V. results displayed in Table 3 further confirm that the copolymer of the invention helps to offset polymer degradation during processing. Again, the difference between the I.V. of the original PET chip and the free fall I.V. of the polymer after the second extrusion step (titled ΔI.V. in Table 3) is significantly less for the inventive Examples 17-19 compared to control Example 16.

A third test was performed according to ASTM D3835 to measure the melt viscosities of a control PET sample (Example 20) and three inventive samples (Examples 21-23). 3 weight % polydiorganosiloxane A was reacted with PET in Example 21, 3 weight % polydiorganosiloxane B was reacted with PET in Example 22, and 1 weight % polydiorganosiloxane B was reacted with PET in Example 23. The results of these measurement are graphically depicted in Figure 2. The inventive samples clearly exhibited a lower melt viscosity. Indeed, the control sample Example 20 has a melt viscosity around 5000 poise in contrast to the melt viscosities of the inventive samples, all of which are below 4000 poise. A reduction in melt viscosity is an advantageous processing aid because it allows for the possibility of spinning at a lower temperature with a reduced tendency towards degradation.

It is presumed that a primary reason why the copolymer of the invention counteracts degradation of the base polymer during processing is the "chain extension" effect caused by the reaction of the base polymer with the polydiorganosiloxane. When the base polymer reacts with the polydiorganosiloxane a comb polymer structure is formed wherein the polydiorganosiloxane chain serves as a connector for a plurality of the base polymers chains. This structure allows the connected base polymer chains to act as essentially one chain and give the appearance of an increase in

the molecular weight of the base polymer.

From the foregoing description, one skilled in the art can easily ascertain the essential characteristics of this invention, and without departing from the spirit and scope thereof, can make various changes and modifications of the invention to adapt it to various usages and conditions.

**TABLE 1-NYLON 6 (ROUND CROSS-SECTION)**

| Example | Additive | Weight (%) | Pot. Temp. °C | Pot Press $10^5$Pa (PSI) | Free Fall Contact Angle ($H_2O$-°) |
|---|---|---|---|---|---|
| 1(control) | - | 0 | 261 | 169 (2450) | 70 |
| 2 | A | 2 | 261 | 132 (1915) | 81 |
| 3 | B | 1 | 264 | 136 (1970) | 81 |
| 4 | B | 2 | 261 | 73 (1060) | 80 |
| 5 | B | 3 | 261 | 116 (1960) | 80 |
| 6 | C | 1 | 261 | 154 (2240) | 77 |
| 7 | C | 2 | 261 | 145 (2100) | 87 |

**TABLE 1-NYLON 6 (ROUND CROSS-SECTION) (cont.)**

| Example | Denier | Modulus (g/d) | Tenacity (g/d) | Ultimate Elonga. (%) | Total Shrink. (%) | Fiber/Metal Friction (grams) |
|---|---|---|---|---|---|---|
| 1(control) | 1480 | 8.02 | 2.4 | 63.4 | 9.1 | 250 |
| 2 | 1436 | 7.79 | 2.9 | 85.5 | 7.7 | 109 |
| 3 | 1475 | 8.2 | 2.4 | 79.7 | 8.9 | 108 |
| 4 | 1429 | 8.14 | 3.0 | 79.8 | 6.7 | 106 |
| 5 | 1450 | 8.00 | 2.9 | 80.9 | 7.3 | 98 |
| 6 | 1431 | 7.18 | 2.7 | 78.0 | 9.1 | 97 |
| 7 | 1399 | 8.16 | 2.7 | 75.4 | 9.3 | 96 |

| TABLE 2 NYLON 6 Y CROSS-SECTION | | | | | |
|---|---|---|---|---|---|
| Example | Additive (3 wt.%) | Finish On Yarn (wt.%) | Pot. Temp. °C | Pot Press $10^5$Pa (PSI) | Free Fall Contact Angle ($H_2O$-°) |
| 8 (control) | - | 0.95 | 248 | 176 (2560) | 70 |
| 9 | A | 1.05 | 247 | 147 (2130) | 80 |
| 10 | B | 1.14 | 247 | 143 (2080) | 81 |
| 11 | C | 1.13 | 250 | 116 (1690) | 87 |
| 12 (control) | - | - | 250 | 172 (2490) | 70 |
| 13 | A | - | 247 | 149 (2160) | 80 |
| 14 | B | - | 250 | 134 (1950) | 81 |
| 15 | C | - | 248 | 114 (1650) | 87 |

| TABLE 2-NYLON 6 (Y CROSS-SECTION) (cont.) | | | | | | |
|---|---|---|---|---|---|---|
| Example | Denier | Modulus (g/d) | Tenacity (g/d) | Ultimate Elongation (%) | Total Shrink. (%) | Fiber/Metal Friction (grams) |
| 8 (control) | 1110 | 5.56 | 2.3 | 95.6 | 7.3 | 150 |
| 9 | 1097 | 5.22 | 2.2 | 87.4 | 9.2 | 130 |
| 10 | 1074 | 6.17 | 2.3 | 96.5 | 8.7 | 124 |
| 11 | 1073 | 5.12 | 2.0 | 98.9 | 7.7 | 124 |
| 12 (control) | - | - | - | - | - | 180 |
| 13 | 1017 | 6.96 | 2.5 | 88.7 | 6.9 | 110 |
| 14 | 1005 | 6.37 | 2.7 | 82.2 | 6.8 | 106 |
| 15 | 1035 | 5.53 | 2.4 | 95.7 | 6.3 | 101 |

TABLE 3 - PET

| Example | Additive | Wt % | Denier | Pot. Temp. (°c) | Pot Pr $10^5$Pa (psi) | Free Fall Contact Angle (°) |
|---|---|---|---|---|---|---|
| 16 (control) | - | - | 586 | 290 | 196 (2850) | 77.2 |
| 17 | B | 3 | 584 | 290 | 173 (2510) | 84.9 |
| 18 | A | 3 | 707 | 290 | 67 (970) | 83.1 |
| 19 | C | 3 | 602 | 290 | 85 (1240) | 88.0 |

TABLE 3 - PET (cont.)

| Example | Chip I.V. | Chip [-COOH] | Free Fall I.V. | Free Fall [-COOH] | ΔI.V. | Δ[-COOH] |
|---|---|---|---|---|---|---|
| 16 (control) | 0.879 | 26.98 | 0.588 | 53.2 | 0.362 | 33 |
| 17 | 1.047 | 12.92 | 0.701 | 31.38 | 0.249 | 11.18 |
| 18 | 0.791 | 22.70 | 0.639 | 38.37 | 0.311 | 18.17 |
| 19 | 0.822 | 21.04 | 0.707 | 31.76 | 0.243 | 11.56 |

TABLE 4

| | % FOY | SOILING dE | % ADDITIVE C |
|---|---|---|---|
| EXAMPLE 20 | .19 | 5.30 | 0.2 |
| | .91 | 8.57 | 0.2 |
| | .95 | 8.38 | 0.2 |
| EXAMPLE 21 | .22 | 5.18 | 0.5 |
| | .24 | 5.49 | 0.5 |
| | .84 | 8.23 | 0.5 |
| | .94 | 9.49 | 0.5 |

TABLE 4 (continued)

| | % FOY | SOILING dE | % ADDITIVE C |
|---|---|---|---|
| EXAMPLE 22 | .43 | 7.09 | 0 |
| | .59 | 7.39 | 0 |
| | .80 | 8.57 | 0 |
| | .87 | 8.13 | 0 |

## Claims

1. A copolymer of a polydiorganosiloxane and a base polymer comprising a structure represented by the following formula A:

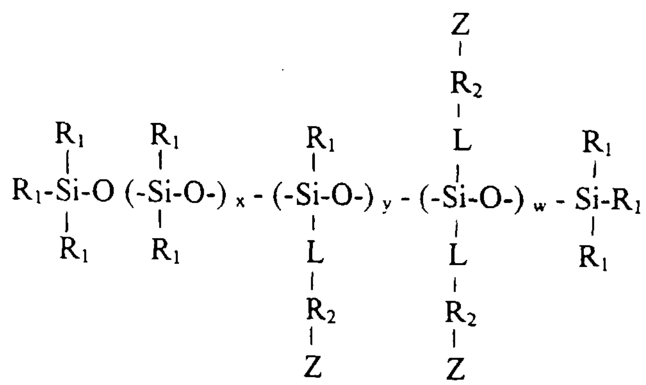

(A)

wherein each of

$R_1$ is the same or different and is selected from the group consisting of alkyl, aryl, cycloalkyl, aralkyl, fluoroalkyl, perfluoroalkyl, fluoroaryl, perfluoroaryl, fluoroaralkyl, perfluoroaralkyl, alkyl ether, aryl ether, perfluoroalkyl ether and perfluoroaryl ether;
L is a divalent linking radical selected from the group consisting of alkylene, arylene, cycloalkylene, aralkylene, fluoroalkylene, perfluoroalkylene, fluoroarylene, perfluoroarylene, fluoroaralkylene, perfluoroaralkylene, alkylene ether, arylene ether perfluoroalkylene ether, perfluoroaralkylene ether, amino alkylene, amino arylene, amino cycloalkylene, amino aralkylene, amino fluoroalkylene, amino perfluoroalkylene, amino fluoroarylene, amino perfluoroarylene, amino fluoroaralkylene, amino perfluoroaralkylene, amido alkylene, amido arylene, amido cycloalkylene, amido aralkylene, amido fluoroalkylene, amido perfluoroalkylene, amido fluoroarylene, amido perfluoroarylene, amido fluoroaralkylene, amido perfluoroaralkylene, keto alkylene, keto arylene, keto cycloalkylene, keto aralkylene, keto fluoroalkylene, keto perfluoroalkylene, keto fluoroarylene, keto perfluoroarylene, keto fluoroaralkylene and keto perfluoroaralkylene;
Z is a base polymer chain attached to $R_2$ through a terminal or a pendant functional group selected from carboxyl, amino and hydroxyl groups;
$R_2$ is a bonding group derived from a precursor selected from the group consisting of epoxy, isocyanate, blocked isocyanate, oxazoline, carbodimide, anhydride and caprolactim ether;
x is 0 to 2000;
y is 2 to 20;
w is 0 to 20, and the

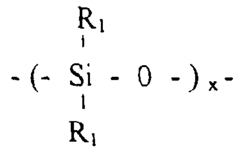 , 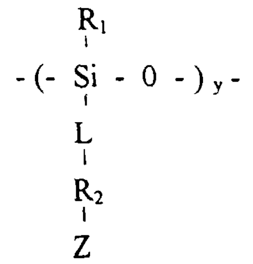 , and 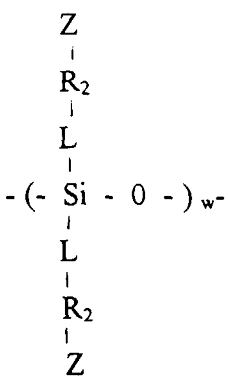

units of formula A are arranged in a random or a block structure.

2. A copolymer of a polydiorganosiloxane and a base polymer comprising a structure represented by the formula A defined in claim 1 wherein $R_1$, L, Z, $R_2$ and x are defined in Claim 1, y is 0 to 20, w is 1 to 20 and the units of formula A are arranged as defined in claim 1.

3. A copolymer according to claim 1 or claim 2 wherein $R_2$ is selected from the group consisting of epoxy, blocked isocyanate and anhydride.

4. A copolymer according to claim 1 or claim 2 wherein Z is selected from the group consisting of polyamide, polyester, polyurea, polyimide, polycarbonate, polyether, polyarylate, polyolefin, polyether ester, telechelic functionalised polystyrene and telechelic functionalised polyolefin.

5. A polydiorganosiloxane-modified base polymer comprising a plurality of polymer chains having a terminal or a pendant functional group selected from carboxyl, amino and hydroxyl groups, wherein at least one of the polymer chains forms a copolymer with a polydiorganosiloxane, the polydiorganosiloxane having a structure represented by the formula B:

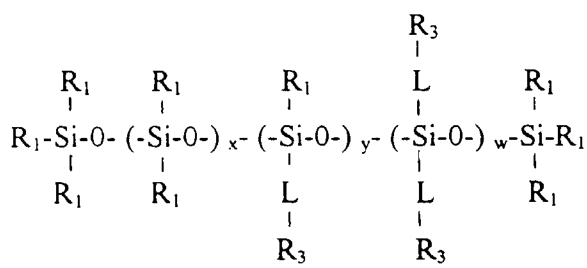

(B)

wherein each of

$R_1$ is the same or different and is selected from the group consisting of alkyl, cycloalkyl, aryl, aralkyl, fluoroalkyl, perfluoroalkyl, fluoroaryl, perfluoroaryl, fluoroaralkyl, perfluoroaralkyl, alkyl ether, aryl ether, perfluoroalkyl ether and perfluoroaryl ether;
L is a divalent linking radical selected from the group consisting of alkylene, arylene, cycloalkylene, aralkylene, fluoroalkylene, perfluoroalkylene, fluoroarylene, perfluoroarylene, fluoroaralkylene, perfluoroaralkylene, alkylene ether, arylene ether, perfluoroalkylene ether, perfluoroaralkylene ether, amino alkylene, amino arylene, amino cycloalkylene, amino aralkylene, amino fluoroalkylene, amino perfluoroalkylene, amino fluoroarylene, amino perfluoroarylene, amino fluoroaralkylene, amino perfluoroaralkylene, amido alkylene, amido arylene, amido cycloalkylene, amido aralkylene, amido fluoroalkylene, amido perfluoroalkylene, amido fluoroarylene, amido perfluoroarylene, amido fluoroaralkylene, amido perfluoroaralkylene, keto alkylene, keto arylene, keto cycloalkylene, keto aralkylene, keto fluoroalkylene, keto perfluoroalkylene, keto fluoroarylene,

keto perfluoroalkylene, keto fluoroaralkylene and keto perfluoroaralkylene;
$R_3$ is a radical selected from the group consisting of epoxy, isocyanate, blocked isocyanate, oxazoline, carbodimide, anhydride and caprolactim ether;
x is 0 to 2000;
y is 2 to 20;
w is 0 to 20; and the

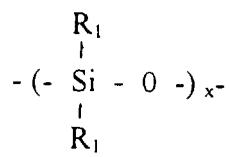 , 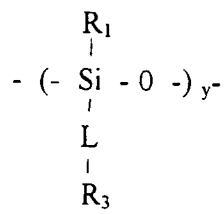 , and 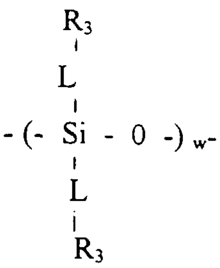

units of formula B are arranged in a random or a block structure.

6. A polydiorganosiloxane-modified base polymer comprising a plurality of polymer chains having a terminal or a pendant functional group selected from carboxyl, amino and hydroxyl groups, wherein at least one of the polymer chains forms a copolymer with a polydiorganosiloxane, the polydiorganosiloxane having a structure represented by the formula B defined in claim 5, wherein R, L, Z, $R_3$ and x are defined in claim 1, y is 0 to 20, w is 1 to 20, and the units of formula B are arranged as defined in claim 5.

7. A polydiorganosiloxane-modified base polymer according to claim 5 or claim 6 wherein the polymer chains comprise a polyamide or a polyester.

8. A polydiorganosiloxane-modified base polymer according to claim 5 or claim 6, wherein the base polymer is in the form of a polymeric fibrous structure.

9. A process for modifying a base polymer by incorporating a polydiorganosiloxane into a base polymer comprising the steps of:

(a) contacting a base polymer having a terminal or a pendant functional group selected from carboxyl, amino and hydroxyl groups with a polydiorganosiloxane having a structure as defined in claim 5 or claim 6; and
(b) subjecting the resultant base polymer/polydiorganosiloxane combination to a reactive condition so that a chemical bond forms between the terminal or pendant functional group of the base polymer and $R_3$ of the polydiorganosiloxane.

10. A process for forming a polydiorganosiloxane-modified polymeric fibrous structure comprising a plurality of polymer chains, the process comprising the steps of:

(a) mixing a plurality of base polymer chains, each chain having at least one terminal or pendant functional groups selected from a carboxyl, amino and hydroxyl groups, with a polydiorganosiloxane having a structure as defined in claim 5 or claim 6;
(b) melt extruding the resultant mixture to form a fibrous structure and chemically bond $R_3$ and the terminal or pendant functional group of at least one of the base polymer chains.

11. A process according to claim 10, wherein step (b) comprises a first melt extrusion of the resultant mixture to form pellets and a second melt extrusion of the pellets to form the fibrous structure.

12. A process according to claim 10, wherein the base polymer chains are selected from the group consisting of polyamide and polyester.

## Patentansprüche

1. Copolymer aus einem Polydiorganosiloxan und einem Grundpolymer mit einer Struktur entsprechend der nachstehenden Formel A:

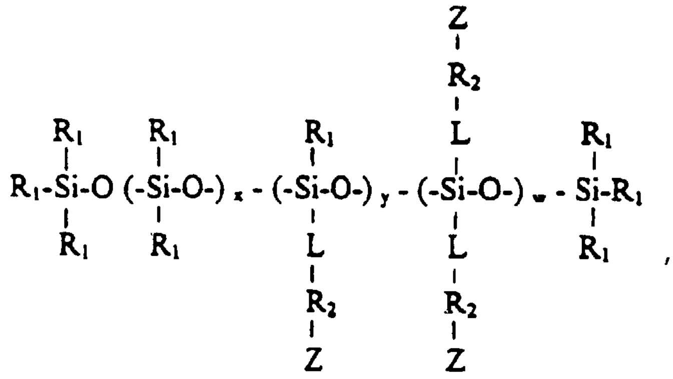

(A)

worin

$R_1$ jeweils gleich oder verschieden ist und Alkyl, Aryl, Cycloalkyl, Aralkyl, Fluoralkyl, Perfluoralkyl, Fluoraryl, Perfluoraryl, Fluoraralkyl, Perfluoraralkyl, Alkylether, Arylether, Perfluoralkylether und Perfluorarylether bedeutet,

L für ein zweiwertiges Verbrückungsglied der Bedeutungen Alkylen, Arylen, Cycloalkylen, Aralkylen, Fluoralkylen, Perfluoralkylen, Fluorarylen, Perfluorarylen, Fluoraralkylen, Perfluoraralkylen, Alkylenether, Arylenether, Perfluoralkylenether, Perfluoraralkylenether, Aminoalkylen, Aminoarylen, Aminocycloalkylen, Aminoaralkylen, Aminofluoralkylen, Aminoperfluoralkylen, Aminofluorarylen, Aminoperfluorarylen, Aminofluoraralkylen, Aminoperfluoraralkylen, Amidoalkylen, Amidoarylen, Amidocycloalkylen, Amidoaralkylen, Amidofluoralkylen, Amidoperfluoralkylen, Amidofluorarylen, Amidoperfluorarylen, Amidofluoraralkylen, Amidoperfluoraralkylen, Ketoalkylen, Ketoarylen, Ketocycloalkylen, Ketoaralkylen, Ketofluoralkylen, Ketoperfluoralkylen, Ketofluorarylen, Ketoperfluorarylen, Ketofluoraralkylen und Ketoperfluoraralkylen steht,

Z eine über eine end- oder seitenständige funktionelle Gruppe aus der Reihe der Carboxyl-, Amino- und Hydroxylgruppen an $R_2$ gebundene Grundpolymerkette bedeutet,

$R_2$ für ein aus einem Vorläufer aus der Reihe Epoxy, Isocyanat, maskiertes Isocyanat, Oxazolin, Carbodimid, Anhydrid und Caprolactimether abgeleitetes Verbindungsglied steht,

x für 0 bis 2000,

y für 2 bis 20 und

w für 0 bis 20 stehen sowie die Einheiten

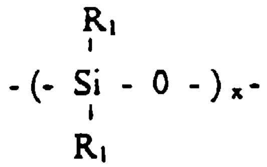 , 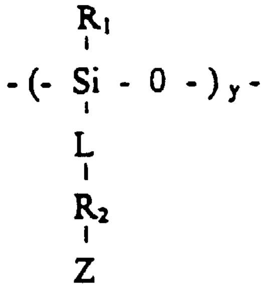 und 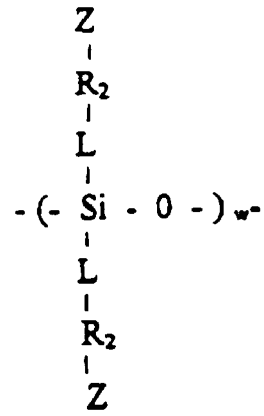

der Formel A statistisch oder blockförmig angeordnet sind.

**2.** Copolymer aus einem Polydiorganosiloxan und einem Grundpolymer mit einer Struktur entsprechend der Formel A gemäß dem Anspruch 1, worin $R_1$, L, Z, $R_2$ und x die in Anspruch 1 genannte Bedeutung haben, y für 0 bis 20 und w für 1 bis 20 stehen sowie die Einheiten der Formel A wie in Anspruch 1 definiert angeordnet sind.

**3.** Copolymer nach Anspruch 1 oder Anspruch 2, worin $R_2$ unter Epoxy, maskiertem Isocyanat und Anhydrid ausgewählt ist.

**4.** Copolymer nach Anspruch 1 oder Anspruch 2, worin Z unter Polyamid, Polyester, Polyharnstoff, Polyimid, Polycarbonat, Polyether, Polyarylat, Polyolefin, Polyetherester, telechel funktionalisiertem Polystyrol und telechel funktionalisiertem Polyolefin ausgewählt ist.

**5.** Mit Polydiorganosiloxan modifiziertes Grundpolymer aus mehreren Polymerketten mit einer unter Carboxyl-, Amino- und Hydroxylgruppen ausgewählten end- oder seitenständigen funktionellen Gruppe, worin mindestens eine der Polymerketten mit einem Polydiorganosiloxan ein Copolymer bildet, wobei das Polydiorganosiloxan eine Struktur entsprechend der Formel B:

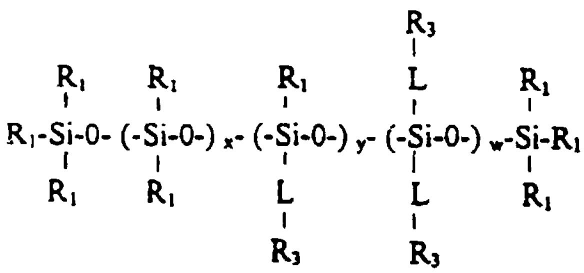

(B)

aufweist, worin

$R_1$ jeweils gleich oder verschieden ist und Alkyl, Cycloalkyl, Aryl, Aralkyl, Fluoralkyl, Perfluoralkyl, Fluoraryl, Perfluoraryl, Fluoraralkyl, Perfluoraralkyl, Alkylether, Arylether, Perfluoralkylether und Perfluorarylether bedeutet,
L für ein zweiwertiges Verbrückungsglied der Bedeutungen Alkylen, Arylen, Cycloalkylen, Aralkylen, Fluoralkylen, Perfluoralkylen, Fluorarylen, Perfluorarylen, Fluoraralkylen, Perfluoraralkylen, Alkylenether, Arylenether, Perfluoralkylenether, Perfluoraralkylenether, Aminoalkylen, Aminoarylen, Aminocycloalkylen, Aminoaralkylen, Aminofluoralkylen, Aminoperfluoralkylen, Aminofluorarylen, Aminoperfluorarylen, Aminofluoraralkylen, Aminoperfluoraralkylen, Amidoalkylen, Amidoarylen, Amidocycloalkylen, Amidoaralkylen, Amidofluoralkylen,

Amidoperfluoralkylen, Amidofluorarylen, Amidoperfluorarylen, Amidofluoraralkylen, Amidoperfluoraralkylen, Ketoalkylen, Ketoarylen, Ketocycloalkylen, Ketoaralkylen, Ketofluoralkylen, Ketoperfluoralkylen, Ketofluorarylen, Ketoperfluorarylen, Ketofluoraralkylen und Ketoperfluoraralkylen steht,
$R_3$ für einen Rest aus der Reihe Epoxy, Isocyanat, maskiertes Isocyanat, Oxazolin, Carbodimid, Anhydrid und Caprolactimether steht;
x für 0 bis 2000,
y für 2 bis 20 und
w für 0 bis 20 stehen sowie die Einheiten

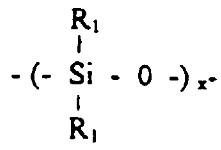 , 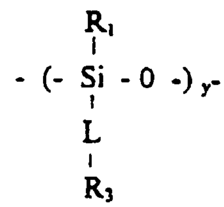 und 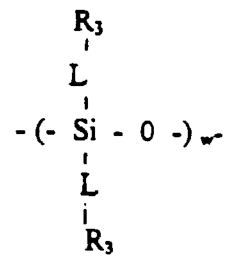

der Formel B statistisch oder blockförmig angeordnet sind.

**6.** Mit Polydiorganosiloxan modifiziertes Grundpolymer aus mehreren Polymerketten mit einer unter Carboxyl-, Amino- und Hydroxylgruppen ausgewählten end- oder seitenständigen funktionellen Gruppe, worin mindestens eine der Polymerketten mit einem Polydiorganosiloxan ein Copolymer bildet, wobei das Polydiorganosiloxan eine Struktur entsprechend der Formel B gemäß Anspruch 5 aufweist, worin R, L, Z, $R_3$ und x die in Anspruch 1 genannte Bedeutung haben, y für 0 bis 20 und w für 1 bis 20 stehen und die Einheiten der Formel B wie in Anspruch 5 definiert angeordnet sind.

**7.** Mit Polydiorganosiloxan modifiziertes Grundpolymer nach Anspruch 5 oder Anspruch 6, worin es sich bei den Polymerketten um ein Polyamid oder einen Polyester handelt.

**8.** Mit Polydiorganosiloxan modifiziertes Grundpolymer nach Anspruch 5 oder Anspruch 6, wobei das Grundpolymer in Form eines polymeren Fasergebildes vorliegt.

**9.** Verfahren zur Modifizierung eines Grundpolymers durch Einbau eines Polydiorganosiloxans in ein Grundpolymer, bei dem man:

(a) ein Grundpolymer mit einer end- oder seitenständigen funktionellen Gruppe aus der Reihe der Carboxyl-, Amino- und Hydroxylgruppen mit einem Polydiorganosiloxan mit einer Struktur gemäß Anspruch 5 oder Anspruch 6 in Berührung bringt und
(b) die dabei entstehende Kombination Grundpolymer/Polydiorganosiloxan unter Bildung einer chemischen Bindung zwischen der end- oder seitenständigen funktionellen Gruppe des Grundpolymers und dem Rest $R_3$ des Polydiorganosiloxans umsetzt.

**10.** Verfahren zur Herstellung eines mit Polydiorganosiloxan modifizierten polymeren Fasergebildes aus mehreren Polymerketten, bei dem man:

(a) mehrere jeweils mindestens eine end- oder seitenständige funktionelle Gruppe aus der Reihe der Carboxyl-, Amino- und Hydroxylgruppen tragende Grundpolymerketten mit einem Polydiorganosiloxan mit einer Struktur gemäß Anspruch 5 oder Anspruch 6 mischt und
(b) das erhaltene Gemisch aus der Schmelze zu einem Fasergebilde ausformt, wobei sich der Rest R3 und die end- oder seitenständige funktionelle Gruppe mindestens einer der Grundpolymerketten chemisch verbinden.

**11.** Verfahren nach Anspruch 10, bei dem man im Schritt (b) das erhaltene Gemisch bei einer ersten Extrusion aus der Schmelze zu Granulat und bei einer zweiten Extrusion aus der Schmelze das Granulat zum Fasergebilde ausformt.

**12.** Verfahren nach Anspruch 10, bei dem man die Grundpolymerketten unter Polyamid und Polyester auswählt.

## Revendications

**1.** Copolymère d'un polydiorganosiloxane et d'un polymère de base comprenant une structure représentée par la formule A suivante :

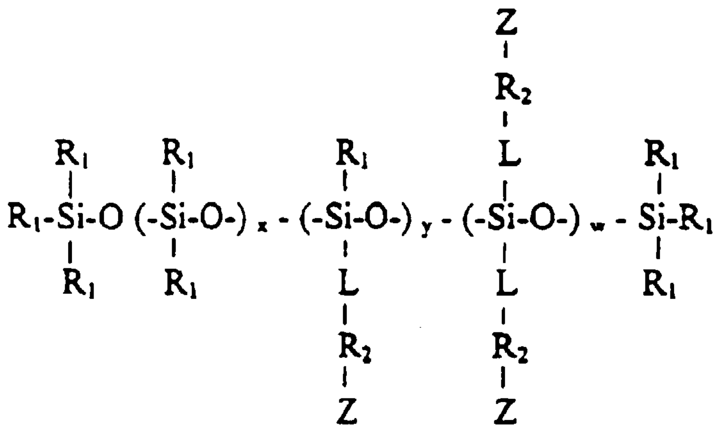

(A)

dans laquelle chaque

$R_1$ est identique ou différent et est sélectionné dans le groupe constitué d'alkyle, d'aryle, de cycloalkyle, d'arylalkyle, de fluoroalkyle, de perfluoroalkyle, de fluoroaryle, de perfluoroaryle, de fluoroarylkyle, de perfluoroarylkyle, d'éther d'alkyle, d'éther d'aryle, d'éther de perfluoroalkyle et d'éther de perfluoroaryle;

L est un radical de liaison divalent sélectionné dans le groupe constitué d'alkylène, d'arylène, de cycloalkylène, d'arylalkylène, de fluoroalkylène, de perfluoroalkylène, de fluoroarylène, de perfluoroarylène, de fluoroarylalkylène, de perfluoroarylalkylène, d'éther d'alkylène, d'éther d'arylène, d'éther de perfluoroalkylène, d'éther de perfluoroarylalkylène, d'alkylène aminé, d'arylène aminé, de cycloalkylène aminé, d'arylalkylène aminé, de fluoroalkylène aminé, de perfluoroalkylène aminé, de fluoroarylène aminé, de perfluoroarylène aminé, de fluoroarylalkylène aminé, de perfluoroarylalkylène aminé, d'amide d'alkylène, d'amide d'arylène, d'amide de cycloalkylène, d'amide d'arylalkylène, d'amide de fluoroalkylène, d'amide de perfluoroalkylène, d'amide de fluoroarylène, d'amide de perfluoroarylène, d'amide de fluoroarylalkylène, d'amide de perfluoroarylalkylène, de cétoalkylène, de cétoarylène, de cétocycloalkylène, de cétoarylalkylène, de cétofluoroalkylène, de cétoperfluoroalkylène, de cétofluoroarylène, de cétoperfluoroarylène, de cétofluoroarylalkylène, et de cétoperfluoroarylalkylène;

Z est une chaîne de polymère de base attachée au $R_2$ au moyen d'un groupement fonctionnel terminal ou pendant sélectionné parmi des groupements carboxyle, aminé et hydroxyle;

$R_2$ est un groupement de liaison dérivé d'un précurseur sélectionné dans le groupe constitué d'époxy, d'isocyanate, d'isocyanate bloqué, d'oxazoline, de carbodiimide, d'anhydride et d'éther de caprolactime;

x est 0 à 2000;

y est 2 à 20;

w est 0 à 20, et les

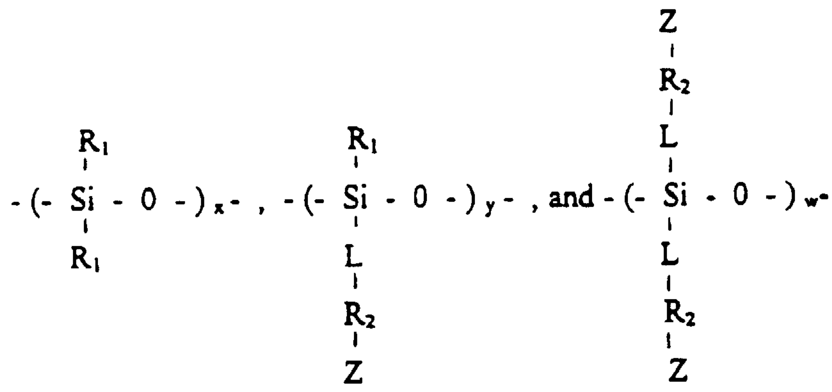

unités de formule A sont arrangées en une structure en blocs ou aléatoire.

2. Copolymère d'un polydiorganosiloxane et d'un polymère de base comprenant une structure représentée par la formule A définie dans la revendication 1, dans laquelle $R_1$, L, Z, $R_2$ et x sont définis dans la revendication 1, y est 0 à 20, w est 1 à 20 et les unités de formule A sont arrangées comme défini dans la revendication 1.

3. Copolymère suivant la revendication 1 ou la revendication 2, dans lequel $R_2$ est sélectionné dans le groupe constitué d'époxy, d'isocyanate bloqué et d'anhydride.

4. Copolymère suivant la revendication 1 ou la revendication 2, dans lequel Z est sélectionné dans le groupe constitué de polyamide, de polyester, de polyurée, de polyimide, de polycarbonate, de polyéther, de polyarylate, de polyoléfine, de polyétherester, de polystyrène à fonctionnalité téléchélique et de polyoléfine à fonctionnalité téléchélique.

5. Polymère de base modifié par un polydiorganosiloxane comprenant une pluralité de chaînes polymères ayant un groupement fonctionnel terminal ou pendant sélectionné parmi des groupements carboxyle, aminé et hydroxyle, dans lequel au moins une des chaînes polymères forme un copolymère avec un polydiorganosiloxane, le polydiorganosiloxane ayant une structure représentée par la formule B :

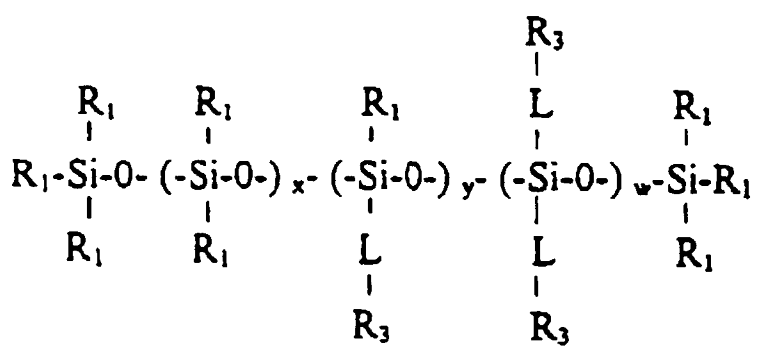

(B)

dans laquelle chaque

$R_1$ est identique ou différent et est sélectionné dans le groupe constitué d'alkyle, de cycloalkyle, d'aryle, d'arylalkyle, de fluoroalkyle, de perfluoroalkyle, de fluoroaryle, de perfluoroaryle, de fluoroarylalkyle, de perfluoroarylalkyle, d'éther d'alkyle, d'éther d'aryle, d'éther de perfluoroalkyle et d'éther de perfluoroaryle;
L est un radical de liaison divalent sélectionné dans le groupe constitué d'alkylène, d'arylène, de cycloalkylène, d'arylalkylène, de fluoroalkylène, de perfluoroalkylène, de fluoroarylène, de perfluoroarylène, de fluoroarylalkylène, de perfluoroarylalkylène, d'éther d'alkylène, d'éther d'arylène, d'éther de perfluoroalkylène, d'éther de perfluoroarylalkylène, d'alkylène aminé, d'arylène aminé, de cycloalkylène aminé, d'arylalkylène aminé, de

fluoroalkylène aminé, de perfluoroalkylène aminé, de fluoroarylène aminé, de perfluoroarylène aminé, de fluoroarylalkylène aminé, de perfluoroarylalkylène aminé, d'amide d'alkylène, d'amide d'arylène, d'amide de cycloalkylène, d'amide d'arylalkylène, d'amide de fluoroalkylène, d'amide de perfluoroalkylène, d'amide de fluoroarylène, d'amide de perfluoroarylène, d'amide de fluoroarylalkylène, d'amide de perfluoroarylalkylène, de cétoalkylène, de cétoarylène, de cétocycloalkylène, de cétoarylalkylène, de cétofluoroalkylène, de cétoperfluoroalkylène, de cétofluoroarylène, de cétoperfluoroalkylène, de cétofluoroarylalkylène, et de cétoperfluoroarylalkylène;

$R_3$ est un radical sélectionné dans le groupe constitué d'époxy, d'isocyanate, d'isocyanate bloqué, d'oxazoline, de carbodiimide, d'anhydride et d'éther de caprolactime;

x est 0 à 2000;

y est 2 à 20;

w est 0 à 20, et les

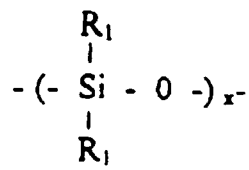 , 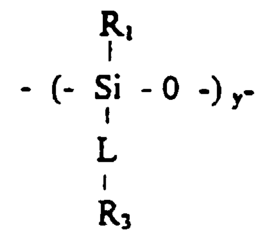 , and 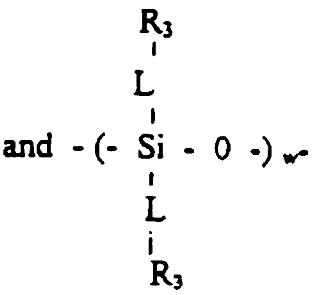

unités de formule B sont arrangées en une structure en blocs ou aléatoire.

6. Polymère de base modifié par un polydiorganosiloxane comprenant une pluralité de chaînes polymères ayant un groupement fonctionnel terminal ou pendant sélectionné parmi des groupements carboxyle, aminé et hydroxyle, dans lequel au moins une des chaînes polymères forme un copolymère avec un polydiorganosiloxane, le polydiorganosiloxane ayant une structure représentée par la formule B définie dans la revendication 5, dans laquelle R, L, Z, $R_3$ et x sont définis dans la revendication 1, y est 0 à 20, w est 1 à 20, et les unités de formule B sont arrangées comme défini dans la revendication 5.

7. Polymère de base modifié par un polydiorganosiloxane suivant la revendication 5 ou la revendication 6, dans lequel les chaînes polymères comprennent un polyamide ou un polyester.

8. Polymère de base modifié par un polydiorganosiloxane suivant la revendication 5 ou la revendication 6, dans lequel le polymère de base est sous la forme d'une structure polymère fibreuse.

9. Procédé pour modifier un polymère de base en incorporant un polydiorganosiloxane dans un polymère de base comprenant les étapes consistant à:

(a) mettre en contact un polymère de base ayant un groupement fonctionnel terminal ou pendant sélectionné parmi des groupements carboxyle, aminé et hydroxyle avec un polydiorganosiloxane ayant une structure telle que définie dans la revendication 5 ou la revendication 6, et

(b) soumettre la combinaison obtenue de polymère de base/polydiorganosiloxane à une condition réactive de sorte qu'une liaison chimique se forme entre le groupement fonctionnel terminal ou pendant du polymère de base et $R_3$ du polydiorganosiloxane.

10. Procédé pour la formation d'une structure polymère fibreuse modifiée par un polydiorganosiloxane comprenant une pluralité de chaînes polymères, le procédé comprenant les étapes consistant à :

(a) mélanger une pluralité de chaînes de polymère de base, chaque chaîne ayant au moins un groupement fonctionnel terminal ou pendant sélectionné parmi des groupements carboxyle, aminé et hydroxyle, avec un polydiorganosiloxane ayant une structure telle que définie dans la revendication 5 ou la revendication 6;

(b) extruder en fusion le mélange obtenu pour former une structure fibreuse et lier chimiquement $R_3$ et le

groupement fonctionnel terminal ou pendant d'au moins une des chaînes de polymère de base.

**11.** Procédé suivant la revendication 10, dans lequel l'étape (b) comprend une première extrusion en fusion du mélange obtenu pour former des pastilles et une deuxième extrusion en fusion des pastilles pour former la structure fibreuse.

**12.** Procédé suivant la revendication 10, dans lequel les chaînes de polymère de base sont sélectionnées dans le groupe constitué de polyamide et de polyester.

FIG. 1

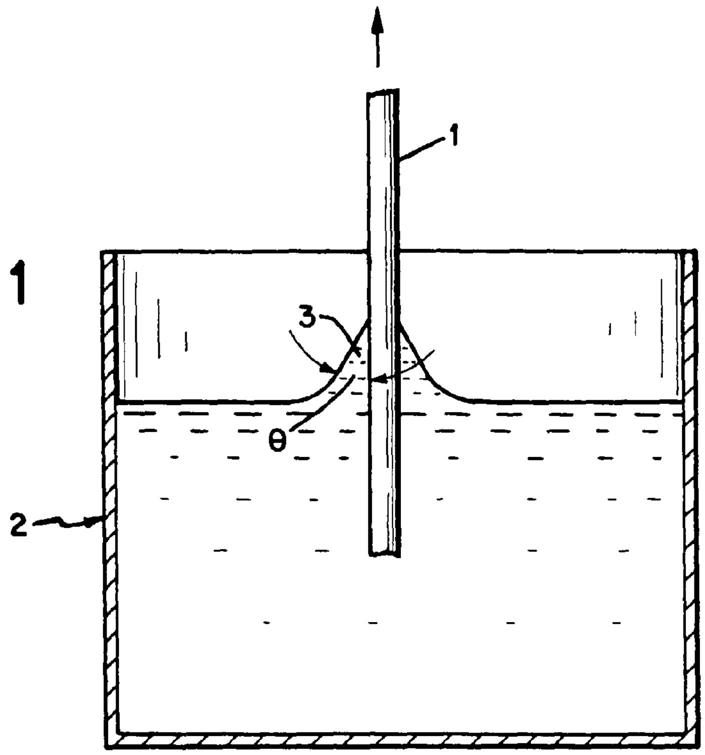
1
2
3
θ

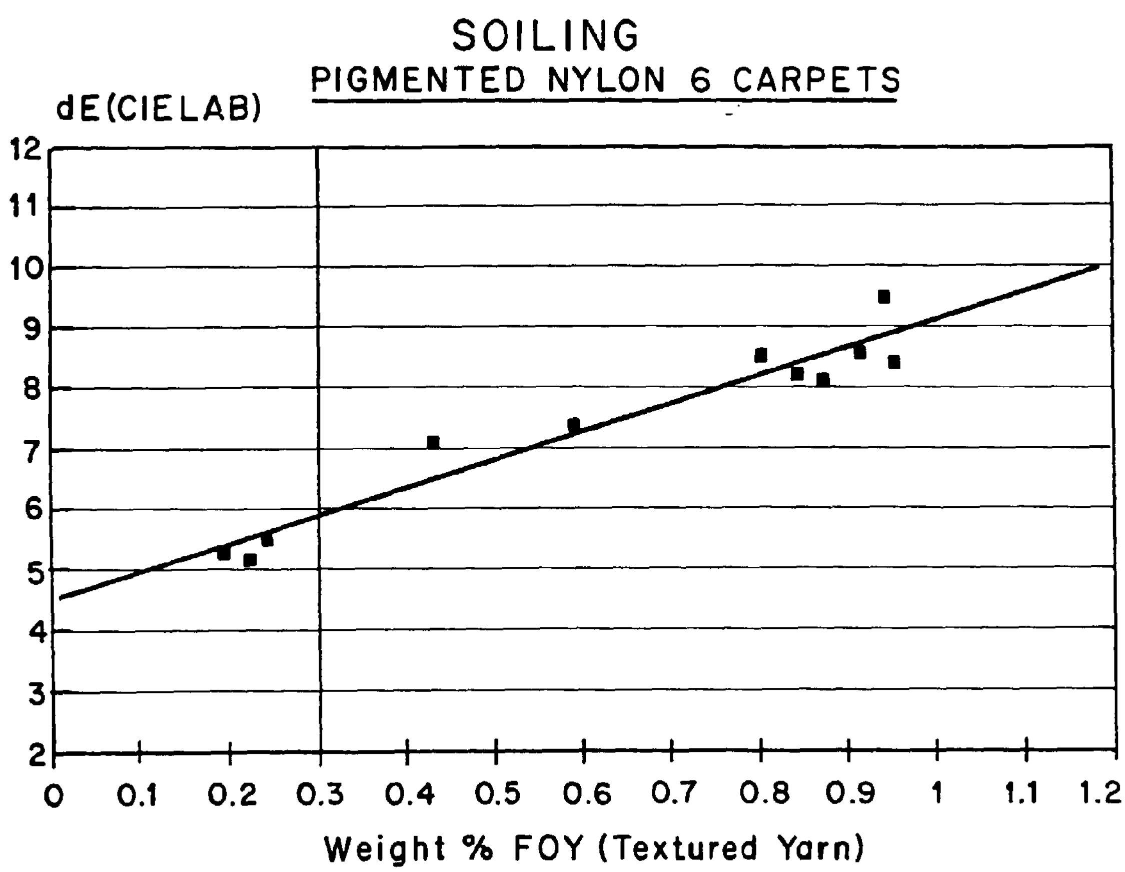
SOILING
PIGMENTED NYLON 6 CARPETS
dE(CIELAB)
12
11
10
9
8
7
6
5
4
3
2
0
0.1
0.2
0.3
0.4
0.5
0.6
0.7
0.8
0.9
1
1.1
1.2
Weight % FOY (Textured Yarn)

FIG. 3

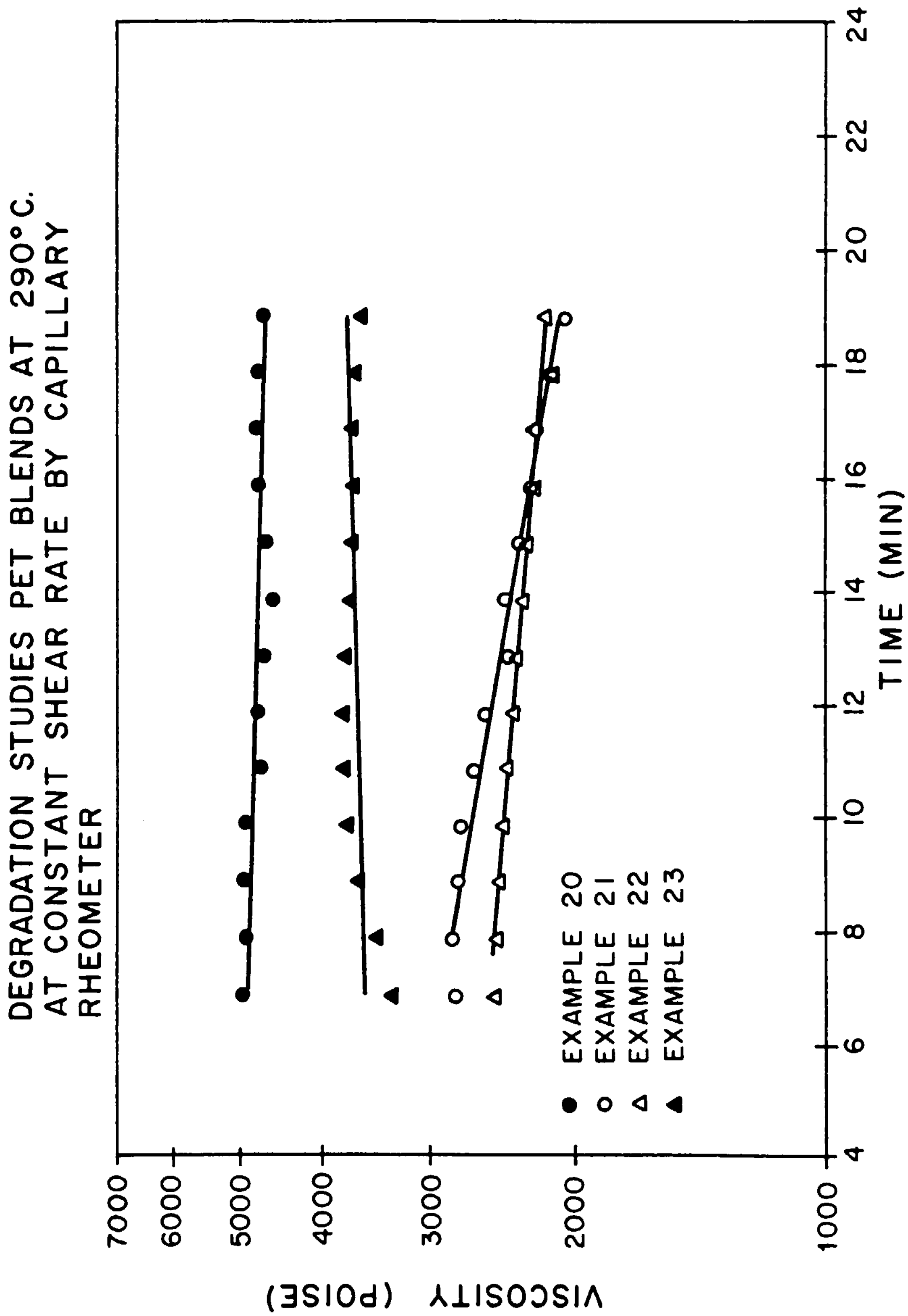
DEGRADATION STUDIES PET BLENDS AT 290° C.
AT CONSTANT SHEAR RATE BY CAPILLARY
RHEOMETER
EXAMPLE 20
EXAMPLE 21
EXAMPLE 22
EXAMPLE 23
VISCOSITY (POISE)
7000
6000
5000
4000
3000
2000
1000
TIME (MIN)
4
6
8
10
12
14
16
18
20
22
24

FIG. 2